(19) Europäisches Patentamt
European Patent Office
Office européen des brevets

(11) EP 4 194 198 A1

(12) **EUROPEAN PATENT APPLICATION**
published in accordance with Art. 153(4) EPC

(43) Date of publication:
**14.06.2023 Bulletin 2023/24**

(21) Application number: **21853605.0**

(22) Date of filing: **04.08.2021**

(51) International Patent Classification (IPC):
***B32B 27/00*** *(2006.01)* ***C09J 9/00*** *(2006.01)*
***C09J 9/02*** *(2006.01)* ***C09J 11/06*** *(2006.01)*
***C09J 201/00*** *(2006.01)* ***C09J 7/29*** *(2018.01)*
***C09J 7/30*** *(2018.01)* ***C09J 7/38*** *(2018.01)*
***B32B 7/06*** *(2019.01)*

(52) Cooperative Patent Classification (CPC):
**B32B 7/06; B32B 27/00; C09J 7/29; C09J 7/30; C09J 7/38; C09J 9/00; C09J 9/02; C09J 11/06; C09J 201/00**

(86) International application number:
**PCT/JP2021/029037**

(87) International publication number:
**WO 2022/030565 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2020 JP 2020135065**
**05.02.2021 JP 2021017545**

(71) Applicant: **NITTO DENKO CORPORATION**
**Ibaraki-shi**
**Osaka 567-8680 (JP)**

(72) Inventors:
- **MIZUHARA Ginji**
  **Ibaraki-shi, Osaka 567-8680 (JP)**
- **TSUMURA Daisuke**
  **Ibaraki-shi, Osaka 567-8680 (JP)**
- **MISHIMA Takehiko**
  **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **ELECTRICALLY PEELABLE ADHESIVE SHEET AND BONDED BODY**

(57) The present invention relates to an electrically debondable adhesive sheet including, in this order, an electrically conductive substrate including a supporting substrate and an electrically conductive layer; a coating layer; and an electrically debondable adhesive layer in which an adhesive force is reduced by application of a voltage, in which the coating layer is formed on a surface of the electrically conductive layer on a side opposite to the supporting substrate, and the electrically debondable adhesive layer and the coating layer are in contact with each other.

**FIG. 1**

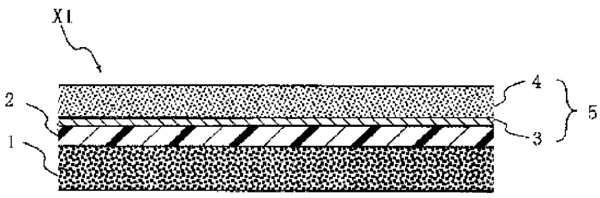

## Description

TECHNICAL FIELD

The present invention relates to an electrically debondable adhesive sheet and a joined body.

BACKGROUND ART

There are growing demands regarding, for example, reworking for improving yield in electronic-component manufacturing steps and the like, and recycling for disassembling and recovering components after use. In order to meet such demands, a double-sided electrically debondable adhesive sheet having certain adhesive force and certain debondability is sometimes utilized for joining members in electronic-component manufacturing steps and the like.

As the double-sided electrically debondable adhesive sheet that achieves the adhesive force and the debondability, an electrically debondable adhesive sheet in which an ionic liquid including a cation and an anion is used for a component forming an adhesive composition and in which debonding is performed by applying a voltage to an adhesive layer (Patent Literatures 1 to 3) is known.

CITATION LIST

PATENT LITERATURE

Patent Literature 1: JP2010-037354A
Patent Literature 2: JP6097112B
Patent Literature3: JP4139851B

SUMMARY OF INVENTION

TECHNICAL PROBLEM

In the electrically debondable adhesive sheet, preferably, the members can be firmly joined to each other when no voltage is applied, and the members can be debonded with a small force when the voltage is applied.

However, in the related art, an electrically conductive layer in a joined body in which the electrically debondable adhesive sheet is attached to an electrically conductive adherend may be debonded from a supporting substrate in a high temperature and high humidity environment, when the electrically debondable adhesive sheet is to be electrically debonded. This sometimes causes a problem that the electrically debondable adhesive sheet may not function and the adherend may be contaminated.

The present invention has been made in view of the above circumstances, and a first object thereof is to provide an electrically debondable adhesive sheet and a joined body that prevent debonding of an electrically conductive layer from a supporting substrate in a high-temperature and high-humidity environment.

In the related art, the joined body in which the electrically debondable adhesive sheet is attached to the electrically conductive adherend may cause a reduction of the adhesive force between the electrically debondable adhesive layer and an electrically conductive substrate, which constitute the electrically debondable adhesive sheet, in the high temperature environment, and this may cause the debonding. Thus, reliability of a member may not be achieved.

The present invention has been made in view of the above circumstances, and a second object thereof is to provide an electrically debondable adhesive sheet and a joined body that can prevent a decrease in adhesive force between an electrically debondable adhesive layer and an electrically conductive substrate, which constitute the electrically debondable adhesive sheet, in a high temperature environment and that can reduce the adhesive force of the electrically debondable adhesive sheet as a result.

Furthermore, there are diversifying situation in which the electrically debondable adhesive sheet is used. When the electrically debondable adhesive sheet is used in an electronic device or the like, the sheet may be undesired to be electrically debonded within a voltage range of the electronic device. When the electrically debondable adhesive sheet is used in a process or the like, the electrically debondable adhesive sheet is subjected to a step of applying a voltage after a step of attaching the sheet. The electrically debondable adhesive sheet is sometimes desired to be electrically debonded by applying a voltage higher than the applied voltage in the above step, and there are various applied voltages and applied times required at the time of the electric debonding. Furthermore, there is a concern about a risk of debonding at the time of electric leakage.

The present invention has been made in view of the above circumstances, and a third object thereof is to provide an electrically debondable adhesive sheet and a joined body in which conditions such as an applied voltage and an applied time at which debonding performance is exhibited can be controlled depending on a purpose by providing a coating layer on an electrically conductive layer.

SOLUTION TO PROBLEM

As a result of repeated studies, the present inventors have found that debonding of an electrically conductive layer from a supporting substrate can be prevented even under a high temperature and high humidity by providing a coating layer in contact with an electrically debondable adhesive layer between the electrically conductive layer and the electrically debondable adhesive layer. The present inventors have found that the debonding between the electrically debondable adhesive layer and the electrically conductive layer can be prevented, by providing a coating layer in contact with an electrically debondable adhesive layer between the electrically conductive layer and the electrically debondable adhesive layer. Furthermore, the present inventors have found that conditions such as an applied voltage and an applied time at which debonding performance is exhibited can be controlled depending on a purpose, by providing a coating layer in contact with an electrically debondable adhesive layer between the electrically conductive layer and the electrically debondable adhesive layer.

A means for solving the above problems is as follows.

[1] An electrically debondable adhesive sheet including, in this order: an electrically conductive substrate including a supporting substrate and an electrically conductive layer; a coating layer; and an electrically debondable adhesive layer in which an adhesive force is reduced by application of a voltage, in which the coating layer is formed on a surface of the electrically conductive layer on a side opposite to the supporting substrate, and the electrically debondable adhesive layer and the coating layer are in contact with each other.

[2] The electrically debondable adhesive sheet according to [1], in which the electrically debondable adhesive layer contains a polymer and an ionic liquid.

[3] The electrically debondable adhesive sheet according to [2], in which a content of the ionic liquid is 0.5 parts by mass or more and 30 parts by mass or less with respect to 100 parts by mass of the polymer.

[4] The electrically debondable adhesive sheet according to [2] or [3], in which an anion of the ionic liquid is at least one selected from the group consisting of a bis(fluorosulfonyl)imide anion and/or a bis(trifluoromethanesulfonyl)imide anion.

[5] The electrically debondable adhesive sheet according to any one of [2] to [4], in which a cation of the ionic liquid is at least one selected from the group consisting of a nitrogen-containing onium cation, a sulfur-containing onium cation, and a phosphorus-containing onium cation.

[6] The electrically debondable adhesive sheet according to any one of [1] to [5], in which the coating layer contains at least one resin selected from a polyester-based resin, an acrylic resin, an epoxy-based resin, and a urethane-based resin, or at least one inorganic substance selected from SiNx, SiOx, $Al_2O_3$ , Ni, and NiCr.

[7] The electrically debondable adhesive sheet according to any one of [1] to [6], further including: another adhesive layer, in which the another adhesive layer is formed on a surface of the supporting substrate on a side opposite to the electrically conductive layer.

[8] The electrically debondable adhesive sheet according to any one of [1] to [6], further including: another adhesive layer; a second electrically conductive layer; and a second another adhesive layer, in which the another adhesive layer is formed on a surface of the supporting substrate on a side opposite to the electrically conductive layer, the second electrically conductive layer and the second another adhesive layer are formed in this order on a surface of the electrically debondable adhesive layer on a side opposite to the coating layer, and the electrically debondable adhesive layer and the second electrically conductive layer are in contact with each other, provided that a second coating layer may be provided between the electrically debondable adhesive layer and the second electrically conductive layer such that the second coating layer is in contact with the electrically debondable adhesive layer.

[9] A joined body including: the electrically debondable adhesive sheet according to any one of [1] to [7]; and an electrically conductive material, in which the electrically debondable adhesive layer is allowed to bond to the electrically conductive material.

[10] A joined body including: the electrically debondable adhesive sheet according to [8]; and an adherend material, in which the another adhesive layer is allowed to bond to the adherend material.

ADVANTAGEOUS EFFECTS OF INVENTION

An electrically debondable adhesive sheet of the present invention can prevent debonding of an electrically conductive layer from a supporting substrate by applying a voltage even in a high temperature and high humidity environment, can prevent the debonding of the electrically debondable adhesive layer from the electrically conductive layer even in a high temperature environment, and can maintain sufficient adhesive force.

BRIEF DESCRIPTION OF DRAWINGS

FIG. 1 is a cross-sectional view illustrating an example of an electrically debondable adhesive sheet according to the present invention.
FIG. 2 is a cross-sectional view illustrating another example of the electrically debondable adhesive sheet according to the present invention.
FIG. 3 is a cross-sectional view illustrating another example of the electrically debondable adhesive sheet according to the present invention.
FIG. 4 is a cross-sectional view illustrating another example of the electrically debondable adhesive sheet according to the present invention.
FIG. 5 is a cross-sectional view illustrating another example of the electrically debondable adhesive sheet according to the present invention.
FIG. 6 is a cross-sectional view illustrating an outline of a method of a 180° peeling test in Examples.
FIG. 7 is a diagram illustrating voltage control evaluation of Examples 1 and 8 of the present invention.
FIG. 8 is a diagram illustrating voltage control evaluation of Examples 9 and 10 of the present invention.
FIG. 9 is a diagram illustrating voltage control evaluation of Examples 13 and 14 of the present invention.
FIG. 10 is a diagram illustrating voltage control evaluation of Example 15 and Comparative Example 1 of the present invention.
FIG. 11 is a diagram illustrating voltage control evaluation of Examples 16 and 17 of the present invention.

DESCRIPTION OF EMBODIMENTS

Hereinafter, embodiments of the present invention will be described in detail. The present invention is not limited to the embodiments to be described below.

[Electrically Debondable Adhesive Sheet]

(Configuration of electrically debondable adhesive sheet)

An electrically debondable adhesive sheet according to an embodiment of the present invention includes, in this order: an electrically conductive substrate including a supporting substrate and an electrically conductive layer; a coating layer; and an electrically debondable adhesive layer in which an adhesive force is reduced by application of a voltage, in which the coating layer is formed on a surface of the electrically conductive layer on a side opposite to the supporting substrate, and the electrically debondable adhesive layer and the coating layer are in contact with each other.

The electrically debondable adhesive sheet according to the embodiment of the present invention has an effect of preventing the electrically conductive layer from being debonded from the supporting substrate by including the coating layer. The electrically debondable adhesive layer and the coating layer are in contact with each other, and this improves adhesion between the electrically debondable adhesive layer and the electrically conductive layer. This achieves an effect of preventing the debonding of the conductive layer in the electrically debondable adhesive sheet exposed to a high temperature environment.

The electrically debondable adhesive sheet according to the present embodiment may include a plurality of each of the electrically conductive layer, the electrically conductive substrate, the coating layer, and the electrically debondable adhesive layer, and may include an adhesive layer, an intermediate layer, an undercoat layer, and the like in addition to the electrically conductive layer, the electrically conductive substrate, the coating layer, and the electrically

debondable adhesive layer.

The electrically debondable adhesive sheet of the present embodiment may be, for example, wound in a roll shape or in a sheet form. The term "electrically debondable adhesive sheet" includes the meaning of an "adhesive tape". That is, the electrically debondable adhesive sheet according to the present embodiment may be an adhesive tape having a tape-shaped form.

The electrically debondable adhesive sheet according to the present embodiment may be a single-sided electrically debondable adhesive sheet including the electrically conductive substrate, and including the coating layer and the electrically debondable adhesive layer on only one surface of the electrically conductive substrate.

The electrically debondable adhesive sheet according to the present embodiment may further include another adhesive layer having no electrical debondability, or may further include another adhesive layer on a surface of the electrically debondable adhesive sheet on a supporting substrate side.

The electrically debondable adhesive sheet according to the present embodiment may be a double-sided electrically debondable adhesive sheet in which the electrically conductive substrate includes the electrically conductive layers on both surfaces of the supporting substrate, and in which the coating layer and the electrically debondable adhesive layer are provided on each of the electrically conductive layers.

The electrically debondable adhesive sheet according to the present embodiment may include the electrically debondable adhesive layer and a separator (release liner) that protects a surface of the other adhesive layer, but the separator shall not be included in the electrically debondable adhesive sheet according to the present embodiment.

The electrically debondable adhesive sheet according to the embodiment of the present invention is also preferably an electrically debondable adhesive sheet further including another adhesive layer, in which
the other adhesive layer is formed on a surface of the supporting substrate on a side opposite to the electrically conductive layer.

The electrically debondable adhesive sheet according to the embodiment of the present invention is also preferably an electrically debondable adhesive sheet further including another adhesive layer, a second electrically conductive layer, and a second another adhesive layer, in which the another adhesive layer is formed on a surface of the supporting substrate on a side opposite to the electrically conductive layer, the second electrically conductive layer and the second another adhesive layer are formed in this order on a surface of the electrically debondable adhesive layer on a side opposite to the coating layer, and the electrically debondable adhesive layer and the second electrically conductive layer are in contact with each other, provided that a second coating layer may be provided between the electrically debondable adhesive layer and the second electrically conductive layer such that the second coating layer is in contact with the electrically debondable adhesive layer.

A structure of the electrically debondable adhesive sheet according to the present embodiment is not limited, but preferable examples thereof include an electrically debondable adhesive sheet X1 shown in FIG. 1, an electrically debondable adhesive sheet X2 shown in FIG. 2, an electrically debondable adhesive sheet X3 shown in FIG. 3, an electrically debondable adhesive sheet X4 shown in FIG. 4, and an electrically debondable adhesive sheet X5 shown in FIG. 5.

The electrically debondable adhesive sheet X1 shown in FIG. 1 is an electrically debondable adhesive sheet having a layer configuration of an electrically debondable adhesive layer 1, a coating layer 2, and an electrically conductive substrate 5 (electrically conductive layer 3 and supporting substrate 4).

The electrically debondable adhesive sheet X2 shown in FIG. 2 is an electrically debondable adhesive sheet having a layer configuration of another adhesive layer 6, an electrically conductive substrate 5 (supporting substrate 4 and electrically conductive layer 3), a coating layer 2, and an electrically debondable adhesive layer 1.

The electrically debondable adhesive sheet X3 shown in FIG. 3 is an electrically debondable adhesive sheet having a layer configuration of another adhesive layer 6, an electrically conductive substrate 5 (supporting substrate 4 and electrically conductive layer 3), a coating layer 2, an electrically debondable adhesive layer 1, a coating layer 2, an electrically conductive substrate 5 (electrically conductive layer 3 and supporting substrate 4), and another adhesive layer 6 in this order. That is, the sheet X3 is a double-sided electrically debondable adhesive sheet, and the coating layer 2, the electrically conductive layer 3, the supporting substrate 4, and the another adhesive layer 6 are provided in this order on each of both surfaces of the electrically debondable adhesive layer 1 in the electrically debondable adhesive sheet X3 shown in FIG. 3.

The electrically debondable adhesive sheet X4 shown in FIG. 4 is a double-sided electrically debondable adhesive sheet having a layer configuration of another adhesive layer 6, an electrically conductive substrate 5 (supporting substrate 4 and electrically conductive layer 3), a coating layer 2, an electrically debondable adhesive layer 1, an electrically conductive substrate 5 (electrically conductive layer 3 and supporting substrate 4), and another adhesive layer 6 in this order.

The electrically debondable adhesive sheet X5 shown in FIG. 5 is a double-sided electrically debondable adhesive sheet having a layer configuration of another adhesive layer 6, an electrically conductive substrate 5 (supporting substrate 4 and electrically conductive layer 3), a coating layer 2, an electrically debondable adhesive layer 1, an

electrically conductive layer 3, and another adhesive layer 6 in this order.

The coating layer 2 is a layer that is formed on a surface of the electrically conductive layer 3 opposite to the supporting substrate 4 and is in contact with the electrically debondable adhesive layer 1.

The electrically debondable adhesive sheet according to the present embodiment includes the coating layer 2, and the coating layer 2 serves as a barrier for an ionic liquid contained in the electrically debondable adhesive layer 1 to enter the electrically conductive layer 3 by an application of a voltage, and has an effect of preventing the electrically conductive layer 3 from being debonded from the supporting substrate 4.

The coating layer 2 is in contact with the electrically debondable adhesive layer 1, and this improves adhesion between the electrically debondable adhesive layer 1 and the electrically conductive layer 3 and prevents the debonding of the conductive layer in the electrically debondable adhesive sheet due to decrease in an interfacial adhesive force between the electrically debondable adhesive layer and an electrically conductive material (for example, an adherend) caused by thermal curing of the electrically debondable adhesive layer exposed to the high temperature environment. The coating layer has such an effect.

The coating layer 2 is a layer containing a resin or an inorganic substance as a main component, and can be formed of a resin composition containing a resin component as a main component or a composition containing an inorganic material as a main component.

The coating layer 2 preferably contains at least one resin selected from a polyester-based resin, an acrylic resin, an epoxy-based resin, and a urethane-based resin, or at least one inorganic substance selected from SiNx, SiOx, $Al_2O_3$, Ni, and NiCr.

When the coating layer 2 contains the resin as the main component, examples of the resin component of the coating layer 2 (resin coating layer) include an epoxy-based resin, a polyester-based resin, an acrylic resin, and a urethane-based resin, and these can be used alone or in combination.

The resin composition forming the coating layer 2 preferably contains the resin component (polymer) as a main agent.

A content of the polymer in the resin composition of the present embodiment is preferably 50% by mass or more and 99.9% by mass or less with respect to a total amount (100% by mass) of the resin composition, an upper limit of the content is more preferably 99.5% by mass, and still more preferably 99% by mass, and a lower limit of the content is more preferably 60% by mass, and still more preferably 70% by mass.

The resin composition may further contain a curing agent. As the curing agent, a commonly used curing agent such as an isocyanate-based curing agent, an epoxy-based curing agent, or a melamine-based curing agent can be used.

The resin composition of the present embodiment may further contain various additives such as a filler, a plasticizer, an anti-aging agent, an antioxidant, a pigment (dye), a flame retardant, a solvent, a surfactant (leveling agent), a rust inhibitor, a corrosion inhibitor, and an antistatic agent. A total content of these components is not limited as long as the effects of the present invention are exhibited, but is preferably 0.01 parts by mass or more and 20 parts by mass or less, more preferably 10 parts by mass or less, and still more preferably 5 parts by mass or less with respect to 100 parts by mass of the resin.

Examples of the filler include silica, iron oxide, zinc oxide, aluminum oxide, titanium oxide, barium oxide, magnesium oxide, calcium carbonate, magnesium carbonate, zinc carbonate, pyrophyllite clay, kaolin clay, and calcined clay.

As the plasticizer, a known and commonly used plasticizer used in general resin compositions and the like can be used, and examples thereof include oils such as paraffin oil and process oil, liquid rubbers such as liquid polyisoprene, liquid polybutadiene, and liquid ethylene-propylene rubber, tetrahydrophthalic acid, azelaic acid, benzoic acid, phthalic acid, trimellitic acid, pyromellitic acid, adipic acid, sebacic acid, fumaric acid, maleic acid, itaconic acid, citric acid, and derivatives thereof, dioctyl phthalate (DOP), dibutyl phthalate (DBP), dioctyl adipate, diisononyl adipate (DINA), and isodecyl succinate.

Examples of the anti-aging agent include hindered phenol-based compounds, and aliphatic or aromatic hindered amine-based compounds.

Examples of the antioxidant include butyl hydroxytoluene (BHT) and butyl hydroxyanisole (BHA).

Examples of the pigment include inorganic pigments such as titanium dioxide, zinc oxide, ultramarine, red iron oxide, lithopone, lead, cadmium, iron, cobalt, aluminum, hydrochloride, and sulfate, and organic pigments such as azo pigments and copper phthalocyanine pigments.

Examples of the rust inhibitor include zinc phosphate, tannic acid derivatives, phosphate esters, basic sulfonates, and various rust inhibiting pigments.

Examples of the corrosion inhibitor include a carbodiimide compound, an adsorptive inhibitor, and a chelate forming type metal deactivator, and for example, those described in JP2019-059908A can be used.

Examples of the antistatic agent typically include quaternary ammonium salts, or hydrophilic compounds such as polyglycolic acid and ethylene oxide derivatives.

A form of the resin composition containing the resin as the main component is not limited, but may be, for

example, an aqueous resin composition, a solvent-based resin composition, a hot melt-type resin composition, an active energy ray-curable resin composition, or the like. Here, the aqueous resin composition refers to a resin composition containing a coating layer forming component in a solvent (aqueous solvent) containing water as a main component, and is a concept including an aqueous dispersion type resin composition in which a component of the coating layer is dispersed in the water, and a water soluble resin composition in which the component of the coating layer is dissolved in the water.

The coating layer 2 (resin coating layer) containing the resin as the main component can be formed by applying the resin composition by a known technique such as a gravure coating, a reverse roll coating, a roll coating, a dip coating, or a comma coating, then drying the resin composition, and, if necessary, curing the resin composition by irradiation with ultraviolet rays, electron beams, or the like.

A thickness of the coating layer 2 (resin coating layer) is preferably 10 nm or more and 5,000 nm or less. An upper limit of the thickness of the coating layer 2 (resin coating layer) is more preferably 2,000 nm, still more preferably 1,000 nm, yet still more preferably 500 nm, yet still more preferably 200 nm, yet still more preferably 170 nm, yet still more preferably 150 nm, even still more preferably 130 nm, and even yet still more preferably 100 nm, and a lower limit of the thickness of the coating layer 2 is more preferably 15 nm, still more preferably 20 nm, yet still more preferably 30 nm, and even yet still more preferably 50 nm.

When the coating layer 2 contains the inorganic substance as the main component, examples of the inorganic substance of the coating layer 2 (inorganic coating layer) include a metal, a metal alloy, a metal oxide, and a metal nitride.

Examples of the metal include silicon, aluminum, nickel, chromium, tin, gold, silver, platinum, zinc, titanium, tungsten, zirconium, and palladium.

The inorganic substance is preferably $Al_2O_3$, Ni, NiCr, or a non-stoichiometric composition inorganic nitride or a non-stoichiometric composition inorganic oxide, such as SiNx or SiOx.

The coating layer 2 (inorganic coating layer) containing the inorganic substance as the main component can be formed by a sputtering, a vapor deposition, or the like.

The thickness of the coating layer 2 (inorganic coating layer) containing the inorganic substance as the main component is preferably 1 nm or more and 1,000 nm or less from the viewpoint of the electrical debondability. The upper limit of the thickness of the coating layer 2 (inorganic coating layer) is more preferably 700 nm, still more preferably 500 nm, still more preferably 200 nm, still more preferably 170 nm, yet still more preferably 150 nm, even still more preferably 130 nm, and even yet still more preferably 100 nm, and the lower limit of the thickness of the coating layer 2 is more preferably 10 nm, still more preferably 20 nm, yet still more preferably 30 nm, and even still more preferably 50 nm.

The electrically conductive layer 3 is not limited as long as the electrically conductive layer 3 is a layer having electrical conductivity, but may be a metallic substrate such as a metal foil (for example, aluminum, magnesium, copper, iron, tin, or gold) or a metal plate (for example, aluminum, magnesium, copper, iron, tin, or silver), a conductive polymer, or the like, or may be a deposited metal film or the like provided on the supporting substrate 4.

A thickness of the electrically conductive layer 3 is preferably 0.001 μm or more and 1,000 μm or less. An upper limit of the thickness is more preferably 500 μm, still more preferably 300 μm, still more preferably 100 μm, still more preferably 50 μm, still more preferably 10 μm, yet still more preferably 5 μm, even still more preferably 1 μm, and even yet still more preferably 0.5 μm, and a lower limit of the thickness is more preferably 0.01 μm, still more preferably 0.02 μm, yet still more preferably 0.03 μm, even still more preferably 0.04 μm, and even yet still more preferably 0.05 μm.

The supporting substrate 4 is not limited, but examples thereof include a paper-based substrate such as paper, a fiber-based substrate such as cloth and nonwoven fabric, a plastic-based substrate such as a film or sheet made of various plastics (polyolefin-based resins such as polyethylene and polypropylene, polyester-based resins such as polyethylene terephthalate, acrylic resins such as polymethyl methacrylate, and the like), and a laminate thereof. The substrate may be in the form of a single layer or a plurality of layers. If necessary, the substrate may be subjected to various treatments such as a back surface treatment, an antistatic treatment, and an undercoat treatment.

A thickness of the supporting substrate 4 is preferably 10 μm or more and 1,000 μm or less. An upper limit of the thickness is more preferably 500 μm, still more preferably 300 μm, still more preferably 100 μm, yet still more preferably 70 μm, even still more preferably 50 μm, even yet still more preferably 40 μm, and a lower limit of the thickness is more preferably 12 μm, still more preferably 25 μm.

The electrically conductive substrate 5 is not limited as long as the electrically conductive substrate 5 includes the supporting substrate 4 and the electrically conductive layer 3, but examples thereof include a substrate in which an electrically conductive layer is formed on a surface of the supporting substrate 4, and examples of the substrate in which an electrically conductive layer is formed on a surface of the supporting substrate include a substrate in which the electrically conductive layer is formed on the surface of the supporting substrate exemplified above by a method such as plating, a chemical evaporation, or sputtering.

A thickness of the electrically conductive substrate 5 is preferably 10 μm or more and 1,000 μm or less. An upper limit of the thickness is more preferably 500 μm, still more preferably 300 μm, still more preferably 100 μm, yet still more preferably 70 μm, even still more preferably 50 μm, even yet still more preferably 40 μm, and a lower limit of

the thickness is more preferably 12 μm, still more preferably 25 μm.

The electrically debondable adhesive sheet can be attached to the electrically conductive material to form a joined body.

Examples of the electrically conductive material include an adherend such as a metal adherend surface, examples of the metal adherend surface include a surface made of a metal containing aluminum, copper, iron, magnesium, tin, gold, silver, lead, or the like as a main component, and a surface made of a metal containing aluminum is particularly preferable. Examples of the adherend including the metal adherend surface include a sheet, a part, and a plate made of a metal containing aluminum, copper, iron, magnesium, tin, gold, silver, lead, or the like as a main component. An adherend other than the adherend including the metal adherend surface is not limited, but examples thereof include a fiber sheet such as paper, cloth, and nonwoven fabric, and various plastic films and sheets.

The electrically debondable adhesive layer 1 is an adhesive layer having a property of decreasing an adhesive force due to the application of the voltage.

The electrically debondable adhesive layer contains a polymer as an adhesive and an electrolyte.

The electrolyte contained in the electrically debondable adhesive layer is a substance that can be ionized into anions and cations, and examples of such an electrolyte include an ionic liquid, an alkali metal salt, and an alkaline earth metal salt. From the viewpoint of achieving good electrical debondability in the electrically debondable adhesive layer, the electrolyte contained in the electrically debondable adhesive layer is preferably an ionic liquid. The ionic liquid is a liquid salt at room temperature (about 25°C) and contains the anions and the cations.

That is, the electrically debondable adhesive layer preferably contains the polymer and the ionic liquid.

The electrically debondable adhesive layer 1 can be formed of an adhesive composition containing the polymer and the ionic liquid. Hereinafter, the adhesive composition of the present embodiment will be described.

In the present specification, the adhesive force when no voltage is applied may be referred to as an "initial adhesive force".

A composition containing components other than the ionic liquid in the adhesive composition may be referred to as an "ionic liquid-free adhesive composition".

An adhesive layer formed of the ionic liquid-free adhesive composition may be referred to as an "ionic liquid-free adhesive layer".

A property of decreasing the adhesive force due to the application of the voltage may be referred to as "electrical debondability", and a matter that a rate of decrease in adhesive force by the application of the voltage is large may be referred to as "excellent electrical debondability".

<Components of Adhesive Composition>

(Polymer)

The adhesive composition of the present embodiment contains the polymer. In the present embodiment, the polymer is not limited as long as the polymer is a general organic polymer compound, but is, for example, a polymer or a partial polymer of a monomer. The monomer may be one kind of monomer or a mixture of two or more kinds of monomers. The term "partial polymer" refers to a polymer obtained by partially polymerizing at least a part of a monomer or a monomer mixture.

The polymer in the present embodiment is not limited as long as the polymer is usually used as an adhesive and has adhesiveness, but examples thereof include an acrylic polymer, a rubber-based polymer, a vinyl alkyl ether-based polymer, a silicone-based polymer, a polyester-based polymer, a polyamide-based polymer, a urethane-based polymer, a fluorine-based polymer, and an epoxy-based polymer. The polymers may be used alone or in combination of two or more.

In order to increase a relative dielectric constant of the components other than the ionic liquid of the obtained electrically debondable adhesive layer and to improve the electrical debondability, the relative dielectric constant of the polymer is preferably large, and from this viewpoint, in particular, the polymer in the present embodiment preferably contains at least one selected from the group consisting of a polyester-based polymer and an acrylic polymer having a carboxyl group and/or a hydroxyl group. The polyester-based polymer has a hydroxyl group, which is easily polarized at a terminal, and the acrylic polymer has a carboxyl group and/or a hydroxyl group, which are easily polarized. Thus, the use of these polymer allows for providing a polymer having a relatively large relative dielectric constant. A total content of the polyester-based polymer and the acrylic polymer having the carboxyl group and/or the hydroxyl group in the polymer of the present embodiment is preferably 60% by mass or more, and more preferably 80% by mass or more.

In particular, in order to increase a cost, productivity, and the initial adhesive force, the polymer in the present embodiment is preferably the acrylic polymer.

That is, the adhesive composition of the present embodiment is preferably an acrylic adhesive composition containing the acrylic polymer as the polymer.

The acrylic polymer preferably contains a monomer unit derived from a (meth)acrylic acid alkyl ester (the following Formula (1)) having an alkyl group having 1 to 14 carbon atoms. Such a monomer unit is suitable for obtaining a large initial adhesive force. In order to increase the relative dielectric constant of the components other than the ionic liquid of the electrically debondable adhesive layer to improve the electrical debondability, the number of carbon atoms of an alkyl group $R^b$ in the following Formula (1) is preferably small, particularly preferably 8 or less, and more preferably 4 or less.

$$CH_2 = C(R^a)COOR^b \qquad (1)$$

(In Formula (1), $R^a$ represents a hydrogen atom or a methyl group, and $R^b$ represents an optionally substituted alkyl group having 1 to 14 carbon atoms.)

Examples of the (meth)acrylic acid alkyl ester having the alkyl group having 1 to 14 carbon atoms include methyl(meth)acrylate, ethyl(meth)acrylate, propyl(meth)acrylate, isopropyl(meth)acrylate, n-butyl(meth)acrylate, sec-butyl(meth)acrylate, 1,3-dimethylbutylacrylate, pentyl(meth)acrylate, isopentyl(meth)acrylate, hexyl(meth)acrylate, 2-ethylbutyl(meth)acrylate, heptyl(meth)acrylate, n-octyl(meth)acrylate, isooctyl(meth)acrylate, 2-ethylhexyl(meth)acrylate, n-nonyl(meth)acrylate, isononyl(meth)acrylate, n-decyl(meth)acrylate, isodecyl(meth)acrylate, n-dodecyl(meth)acrylate, n-tridecyl(meth)acrylate, n-tetradecyl(meth)acrylate, and 2-methoxyethyl acrylate. Among these, n-butyl acrylate, 2-ethylhexyl acrylate, isononyl acrylate, and 2-methoxyethyl acrylate are preferable. The (meth)acrylic acid alkyl ester having the alkyl group having 1 to 14 carbon atoms may be used alone or in combination of two or more kinds thereof.

A proportion of the (meth)acrylic acid alkyl ester having the alkyl group having 1 to 14 carbon atoms to the total monomer components (100% by mass) of the acrylic polymer is not limited, but is preferably 70% by mass or more, more preferably 80% by mass or more, and still more preferably 85% by mass or more. When the proportion of the (meth)acrylic acid alkyl ester having the alkyl group having 1 to 14 carbon atoms is 70% by mass or more, the large initial adhesive force can be easily achieved.

The acrylic polymer preferably contains, in addition to the monomer unit derived from the (meth)acrylic acid alkyl ester having the alkyl group having 1 to 14 carbon atoms, a monomer unit derived from a polar group-containing monomer copolymerizable with the monomer unit derived from the (meth)acrylic acid alkyl ester for the purpose of modifying a cohesive force, heat resistance, a crosslinking property, and the like. The monomer unit can provide a crosslinking point, and is suitable for achieving the large initial adhesive force. From the viewpoint of increasing the relative dielectric constant of the components other than the ionic liquid of the electrically debondable adhesive layer and improving the electrical debondability, the acrylic polymer preferably contains the monomer unit derived from the polar group-containing monomer.

Examples of the polar group-containing monomer include a carboxyl group-containing monomer, a hydroxyl group-containing monomer, a cyano group-containing monomer, a vinyl group-containing monomer, an aromatic vinyl monomer, an amide group-containing monomer, an imide group-containing monomer, an amino group-containing monomer, an epoxy group-containing monomer, a vinyl ether monomer, N-acryloylmorpholine, a sulfo group-containing monomer, a phosphoric acid group-containing monomer, and an acid anhydride group-containing monomer. Among these, a carboxyl group-containing monomer, a hydroxyl group-containing monomer, and an amide group-containing monomer are preferable, and the carboxyl group-containing monomer is particularly preferable, from the viewpoint of an excellent cohesive property. The carboxyl group-containing monomer is suitable for achieving a particularly large initial adhesive force. The polar group-containing monomer may be used alone or in combination of two or more kinds thereof.

Examples of the carboxyl group-containing monomer include acrylic acid, methacrylic acid, carboxyethyl(meth)acrylate, carboxypentyl(meth)acrylate, itaconic acid, maleic acid, fumaric acid, crotonic acid, and isocrotonic acid. In particular, acrylic acid is preferable. The carboxyl group-containing monomer may be used alone or in combination of two or more kinds thereof.

Examples of the hydroxyl group-containing monomer include 2-hydroxyethyl(meth)acrylate, 2-hydroxypropyl(meth)acrylate, 4-hydroxybutyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methyl(meth)acrylate, N-methylol(meth)acrylamide, polyvinyl alcohol, allyl alcohol, 2-hydroxyethyl vinyl ether, 4-hydroxybutyl vinyl ether, and diethylene glycol monovinyl ether. In particular, 2-hydroxyethyl(meth)acrylate and 4-hydroxybutyl(meth)acrylate are preferable. The hydroxyl group-containing monomer may be used alone or in combination of two or more kinds thereof.

Examples of the amide group-containing monomer include acrylamide, methacrylamide, N-vinylpyrrolidone, N,N-dimethylacrylamide, N,N-dimethyl methacrylamide, N,N-diethylacrylamide, N,N-diethyl methacrylamide, N,N'-methylene-bisacrylamide, N,N-dimethylaminopropyl acrylamide, N,N-dimethylaminopropyl methacrylamide, and diacetone acrylamide. The amide group-containing monomer may be used alone or in combination of two or more kinds thereof.

Examples of the cyano group-containing monomer include acrylonitrile and methacrylonitrile.

Examples of the vinyl group-containing monomer include vinyl esters such as vinyl acetate, vinyl propionate, and vinyl laurate, and vinyl acetate is particularly preferable.

Examples of the aromatic vinyl monomer include styrene, chlorostyrene, chloromethylstyrene, $\alpha$-methylstyrene, and other substituted styrenes.

Examples of the imide group-containing monomer include cyclohexylmaleimide, isopropylmaleimide, N-cyclohexylmaleimide, and itaconimide.

Examples of the amino group-containing monomer include aminoethyl(meth)acrylate, N,N-dimethylaminoethyl(meth)acrylate, and N,N-dimethylaminopropyl(meth)acrylate.

Examples of the epoxy group-containing monomer include glycidyl(meth)acrylate, methylglycidyl(meth)acrylate, and allyl glycidyl ether.

Examples of the vinyl ether monomer include methyl vinyl ether, ethyl vinyl ether, and isobutyl vinyl ether.

A proportion of the polar group-containing monomer to the total monomer components (100% by mass) of the acrylic polymer is preferably 0.1% by mass or more and 35% by mass or less. An upper limit of the proportion of the polar group-containing monomer is more preferably 25% by mass, and still more preferably 20% by mass, and an lower limit of the proportion of the polar group-containing monomer is more preferably 0.5% by mass, still more preferably 1% by mass, and particularly preferably 2% by mass. When the proportion of the polar group-containing monomer is 0.1% by mass or more, the cohesive force is easily obtained. Thus, an adhesive residue is less likely to occur on a surface of the adherend after the debonding of the electrically debondable adhesive layer, and the electrical debondability is improved. When the proportion of the polar group-containing monomer is 30% by mass or less, it is easy to prevent the electrically debondable adhesive layer from excessively adhering to the adherend to cause heavy debonding. In particular, when the proportion of the polar group-containing monomer is 2% by mass or more and 20% by mass or less, both the debondability to the adherend and adhesion between the electrically debondable adhesive layer and another layer can be easily achieved in a balanced manner.

As the monomer component of the acrylic polymer, a polyfunctional monomer may be contained in order to introduce a crosslinked structure into the acrylic polymer to easily obtain a necessary cohesive force.

Examples of the polyfunctional monomer include ethylene glycol di(meth)acrylate, diethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinyl benzene, and N,N'-methylene-bis-acrylamide. The polyfunctional monomers may be used alone or in combination of two or more thereof.

A content of the polyfunctional monomer with respect to the total monomer components (100% by mass) of the acrylic polymer is preferably 0.1% by mass or more and 15% by mass or less. An upper limit of the content of the polyfunctional monomer is more preferably 10% by mass, and a lower limit thereof is more preferably 3% by mass. When the content of the polyfunctional monomer is 0.1% by mass or more, flexibility and adhesiveness of the electrically debondable adhesive layer are easily improved, which is preferable. When the content of the polyfunctional monomer is 15% by mass or less, the cohesive force does not become too high, and appropriate adhesiveness is easily obtained.

The polyester-based polymer is typically a polymer having a structure in which a polycarboxylic acid such as a dicarboxylic acid or a derivative thereof (hereinafter, also referred to as a "polycarboxylic acid monomer") and polyhydric alcohol such as a diol or a derivative thereof (hereinafter, referred to as a "polyhydric alcohol monomer") are condensed.

The polycarboxylic acid monomer is not limited, but examples thereof include adipic acid, azelaic acid, dimer acid, sebacic acid, 1,4-cyclohexanedicarboxylic acid, 1,3-cyclohexanedicarboxylic acid, 1,2-cyclohexanedicarboxylic acid, 4-methyl-1,2-cyclohexanedicarboxylic acid, dodecenyl succinic anhydride, fumaric acid, succinic acid, dodecanedioic acid, hexahydrophthalic anhydride, tetrahydrophthalic anhydride, maleic acid, maleic anhydride, itaconic acid, citraconic acid, and derivatives thereof.

The polycarboxylic acid monomer may be used alone or in combination of two or more kinds thereof.

The polyhydric alcohol monomer is not limited, but examples thereof include ethylene glycol, 1,2-propylene glycol, 1,3-propanediol, 2-methyl-1,3-propanediol, 1,2-butanediol, 1,3-butanediol, 1,4-butanediol, 1,5-pentanedione, 1,6-hexanediol, 3-methyl-1,5-pentanediol, neopentyl glycol, diethylene glycol, dipropylene glycol, 2,2,4-trimethyl-1,5-pentanediol, 2-ethyl-2-butylpropanediol, 1,9-nonanediol, 2-methyloctanediol, 1,10-decanediol, and derivatives thereof.

The polyhydric alcohol monomers may be used alone or in combination of two or more kinds thereof.

The polymer of the present embodiment may contain an ionic polymer. The ionic polymer is a polymer having an ionic functional group. When the polymer contains the ionic polymer, the relative dielectric constant of the polymer is increased, and the electrical debondability is improved. When the polymer contains the ionic polymer, a content of the ionic polymer is preferably 0.05 parts by mass or more and 2 parts by mass or less with respect to 100 parts by mass of the polymer.

In the present embodiment, the polymer can be obtained by (co)polymerizing the monomer components. A polymerization method is not limited, but examples thereof include a solution polymerization, an emulsion polymerization, a bulk polymerization, a suspension polymerization, and a photopolymerization (active energy ray polymerization). In

particular, the solution polymerization is preferable from the viewpoint of a cost and productivity. When the polymer is obtained by the copolymerizing, the polymer may be any of a random copolymer, a block copolymer, an alternating copolymer, a graft copolymer, and the like.

The solution polymerization is not limited, but examples thereof include a method in which monomer components, a polymerization initiator, and the like are dissolved in a solvent and polymerized by heating to obtain a polymer solution containing a polymer.

As the solvent used in the solution polymerization, various general solvents can be used. Examples of such a solvent (polymerization solvent) include organic solvents such as aromatic hydrocarbons such as toluene, benzene, and xylene; esters such as ethyl acetate and n-butyl acetate; aliphatic hydrocarbons such as n-hexane and n-heptane; alicyclic hydrocarbons such as cyclohexane and methylcyclohexane; and ketones such as methyl ethyl ketone and methyl isobutyl ketone. The solvents may be used alone or in combination of two or more kinds thereof.

An amount of the solvent to be used is not limited, but is preferably 10 parts by mass or more and 1,000 parts by mass or less with respect to the total monomer components (100 parts by mass) of the polymer. An upper limit of the amount of the solvent to be used is more preferably 500 parts by mass, and a lower limit thereof is more preferably 50 parts by mass.

The polymerization initiator to be used in the solution polymerization is not limited, and examples thereof include a peroxide-based polymerization initiator and an azo-based polymerization initiator. The peroxide-based polymerization initiator is not limited, but examples thereof include peroxycarbonate, ketone peroxide, peroxyketal, a hydroperoxide, a dialkyl peroxide, diacyl peroxide, and peroxyester, and specific examples thereof include benzoyl peroxide, t-butyl hydroperoxide, di-t-butyl peroxide, t-butyl peroxybenzoate, dicumyl peroxide, 1,1-bis(t-butylperoxy) -3,3,5-trimethylcyclohexane, and 1,1-bis(t-butylperoxy) cyclododecane. The azo-based polymerization initiator is not limited, but examples thereof include 2,2'-azobisisobutyronitrile, 2,2'-azobis-2-methylbutyronitrile, 2,2'-azobis(2,4-dimethylvaleronitrile), dimethyl 2,2'-azobis(2-methylpropionate), 2,2'-azobis(4-methoxy-2,4-dimethylvaleronitrile), 1,1'-azobis(cyclohexane-1-carbonitrile), 2,2'-azobis(2,4,4-trimethylpentane), 4,4'-azobis-4-cyanovaleric acid, 2,2'-azobis(2-amidinopropane)dihydrochloride, 2,2'-azobis [2-(5-methyl-2-imidazoline-2-yl)propane]dihydrochloride, 2,2'-azobis(2-methylpropionamidine) disulfate, 2,2'-azobis(N,N'-dimethylene isobutyramidine)hydrochloride, and 2,2'-azobis[N-(2-carboxyethyl)-2-methylpropionamidine]hydrate. The polymerization initiator may be used alone or in combination of two or more kinds thereof.

A amount of the polymerization initiator to be used is not limited, but is preferably 0.01 parts by mass or more and 5 parts by mass or less with respect to the total monomer components (100 parts by mass) of the polymer. An upper limit of the amount of the polymerization initiator to be used is more preferably 3 parts by mass, and a lower limit thereof is more preferably 0.05 parts by mass.

In the solution polymerization, a heating temperature when the monomer components, the polymerization initiator, and the like are heated and polymerized is not limited, but is, for example, 50°C or more and 80°C or less. A heating time is not limited, but is, for example, 1 hour or more and 24 hours or less.

A weight average molecular weight of the polymer is not limited, but is preferably 100,000 or more and 5,000,000 or less. An upper limit of the weight average molecular weight is more preferably 4,000,000, and still more preferably 3,000,000, and a lower limit thereof is more preferably 200,000, still more preferably 300,000. When the weight average molecular weight is 100,000 or more, the cohesive force becomes small, and it is possible to effectively prevent a problem that the adhesive residue is present on the surface of the adherend after the electrically debondable adhesive layer is debonded. When the weight average molecular weight is 5,000,000 or less, it is possible to effectively prevent a problem that wettability of the surface of the adherend becomes insufficient after the electrically debondable adhesive layer is debonded.

The weight average molecular weight is obtained by gel permeation chromatography (GPC), and more specifically, the weight average molecular weight can be measured under the following conditions using, for example, "HLC-8220GPC" (trade name, manufactured by Tosoh Corporation) as a GPC measuring device, and can be calculated based on a standard polystyrene equivalent.

(Weight Average Molecular Weight Measurement Conditions)

· Sample concentration: 0.2% by mass (tetrahydrofuran solution)
· Sample introduction volume: 10 $\mu$L
· Sample column: TSKguardcolumn SuperHZ-H (one column) + TSKgel SuperHZM-H (two columns)
· Reference column: TSKgel SuperH-RC (one column)
· Eluent: tetrahydrofuran (THF)
· Flow rate: 0.6 mL/min
· Detector: differential refractometer (RI)

· Column temperature (measurement temperature): 40°C

A glass transition temperature (Tg) of the polymer is not limited, but is preferably 0°C or less since a decrease in initial adhesive force can be reduced, more preferably -10°C or less, and still more preferably -20°C or less. The glass transition temperature is particularly preferably -40°C or less since the rate of the decrease in adhesive force due to the application of the voltage becomes particularly large, and most preferably -50°C or less.
The glass transition temperature (Tg) can be calculated, for example, based on the following Formula (Y) (Fox formula).

$$1/Tg = W1/Tg1 + W2/Tg2 + ... + Wn/Tgn \quad (Y)$$

(In Formula (Y), Tg represents the glass transition temperature (unit: K) of the polymer, Tgi (i = 1, 2, ..., n) represents the glass transition temperature (unit: K) when a monomer i forms a homopolymer, and Wi (i = 1, 2, ..., n) represents a mass fraction of the monomer i in the total monomer components)
The above Formula (Y) is a calculation formula when the polymer contains n kinds of monomer components, that is, a monomer 1, a monomer 2, ..., and a monomer n.
The glass transition temperature when the homopolymer is formed means a glass transition temperature of a homopolymer of the monomer, and means a glass transition temperature (Tg) of a polymer formed of only a certain monomer (sometimes referred to as a "monomer X") as the monomer component. Specifically, numerical values are listed in "Polymer Handbook" (third edition, John Wiley & Sons, Inc., 1989). A glass transition temperature (Tg) of a homopolymer that is not described in this document refers to, for example, a value obtained by the following measurement method. That is, 100 parts by mass of the monomer X, 0.2 parts by mass of 2,2'-azobisisobutyronitrile, and 200 parts by mass of ethyl acetate as a polymerization solvent are put into a reactor including a thermometer, a stirrer, a nitrogen introduction pipe, and a reflux condenser, and the mixture is stirred for 1 hour while introducing a nitrogen gas. After oxygen in a polymerization system is removed in this manner, the temperature is raised to 63°C and the reaction is performed for 10 hours. Next, the mixture is cooled to room temperature to obtain a homopolymer solution having a solid content concentration of 33% by mass. Next, this homopolymer solution is cast and coated on a release liner and the coated release liner is dried to prepare a test sample (sheet-shaped homopolymer) having a thickness of about 2 mm. Then, about 1 to 2 mg of the test sample is weighed in an aluminum open cell, and reversing heat flow (specific heat component) behaviors of the homopolymer are determined at a temperature rising rate of 5°C/min in a nitrogen atmosphere of 50 ml/min using a temperature modulated DSC (trade name: "Q-2000", manufactured by TA Instruments). With reference to JIS-K-7121, a temperature at a point of an intersection of, a straight line which is equally distant in a direction of vertical axis from an extended line of a base line on a low temperature side and a base line on a high temperature side of the obtained reversing heat flow, and a curved line of a stepwise change portion of glass transition is defined as the glass transition temperature (Tg) of the homopolymer.
A content of the polymer in the adhesive composition of the present embodiment is preferably 50% by mass or more and 99.9% by mass or less with respect to the total amount (100% by mass) of the adhesive composition, an upper limit of the content is more preferably 99.5% by mass, and still more preferably 99% by mass, and a lower limit of the content is more preferably 60% by mass, and still more preferably 70% by mass.

(Ionic Liquid)

The ionic liquid in the present embodiment is not limited as long as the ionic liquid is a molten salt (room temperature molten salt) which is a liquid at 25°C and composed of a pair of anion and cation. Examples of the anion and the cation are given below, and among ionic materials obtained by combining these, matters that are liquid at 25°C are the ionic liquids, and matters are solid at 25°C are not the ionic liquids but ionic solids to be described below.
Examples of the anion of the ionic liquid include $(FSO_2)_2N^-$, $(CF_3SO_2)_2N^-$, $(CF_3CF_2SO_2)_2N^-$, $(CF_3SO_2)_3C^-$, $Br^-$, $AlCl_4^-$, $Al_2Cl_7^-$, $NO_3^-$, $BF_4^-$, $PF_6^-$, $CH_3COO^-$, $CF_3COO^-$, $CF_3CF_2CF_2COO^-$, $CF_3SO_3^-$, $CF_3(CF_2)_3SO_3^-$, $AsF_6^-$, $SbF_6^-$, and $F(HF)n^-$. Among these, as the anion, an anion of a sulfonylimide compound such as a $(FSO_2)_2N^-$[bis(fluorosulfonyl)imide anion] and a $(CF_3SO_2)_2N^-$[bis(trifluoromethanesulfonyl)imide anion] is preferable as the anion of a sulfonylimide compound is chemically stable and is suitable for improving the electrical debondability. That is, the anion of the ionic liquid is preferably at least one selected from the group consisting of a bis(fluorosulfonyl)imide anion and/or a bis(trifluoromethanesulfonyl)imide anion.
The cation in the ionic liquid is preferably at least one selected from the group consisting of a nitrogen-containing onium cation, a sulfur-containing onium cation, and a phosphorus-containing onium cation as the cation is chemically stable and is suitable for improving the electrical debondability, and more preferably an imidazolium cation, an ammonium cation, a pyrrolidinium cation, and a pyridinium cation.

Examples of the imidazolium cation include a 1-methylimidazolium cation, a 1-ethyl-3-methylimidazolium cation, 1-propyl-3-methylimidazolium cation, 1-butyl-3-methylimidazolium cation, 1-pentyl-3-methylimidazolium cation, 1-hexyl-3-methylimidazolium cation, 1-heptyl-3-methylimidazolium cation, 1-octyl-3-methylimidazolium cation, 1-nonyl-3-methylimidazolium cation, 1-undecyl-3-methylimidazolium cation, 1-dodecyl-3-methylimidazolium cation, 1-tridecyl-3-methylimidazolium cation, 1-tetradecyl-3-methylimidazolium cation, 1-pentadecyl-3-methylimidazolium cation, 1-hexadecyl-3-methylimidazolium cation, 1-heptadecyl-3-methylimidazolium cation, 1-octadecyl-3-methylimidazolium cation, 1-undecyl-3-methylimidazolium cation, 1-benzyl-3-methylimidazolium cation, 1-butyl-2,3-dimethylimidazolium cation, and 1,3-bis(dodecyl)imidazolium cation.

Examples of the pyridinium cation include a 1-butylpyridinium cation, a 1-hexylpyridinium cation, a 1-butyl-3-methylpyridinium cation, a 1-butyl-4-methylpyridinium cation, and a 1-octyl-4-methylpyridinium cation.

Examples of the pyrrolidinium cation include a 1-ethyl-1-methylpyrrolidinium cation and a 1-butyl-1-methylpyrrolidinium cation.

Examples of the ammonium cation include a tetraethylammonium cation, a tetrabutylammonium cation, a methyltrioctylammonium cation, a tetradecyltrihexylammonium cation, a glycidyltrimethylammonium cation, and a trimethylaminoethylacrylate cation.

As the ionic liquid, from the viewpoint of increasing the rate of the decrease in adhesive force at the time of the voltage application, it is preferable to select a cation having a molecular weight of 160 or less as the cation of the ionic liquid, and an ionic liquid containing the $(FSO_2)_2N^-$[bis(fluorosulfonyl)imide anion] or the $(CF_3SO_2)_2N^-$[bis(trifluoromethanesulfonyl)imide anion] and a cation having the molecular weight of 160 or less is particularly preferable. Examples of the cation having the molecular weight of 160 or less include a 1-methylimidazolium cation, a 1-ethyl-3-methylimidazolium cation, a 1-propyl-3-methylimidazolium cation, a 1-butyl-3-methylimidazolium cation, a 1-pentyl-3-methylimidazolium cation, a 1-butylpyridinium cation, a 1-hexylpyridinium cation, a 1-butyl-3-methylpyridinium cation, a 1-butyl-4-methylpyridinium cation, a 1-ethyl-1-methylpyrrolidinium cation, a 1-butyl-1-methylpyrrolidinium cation, a tetraethylammonium cation, a glycidyltrimethylammonium cation, and a trimethylaminoethylacrylate cation.

As the cation of the ionic liquid, a cation represented by the following Formula (2-A) to (2-D) is also preferable.

[Chem. 1]

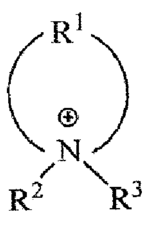

(2-A)

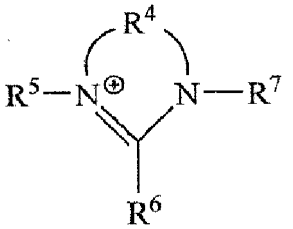

(2-B)

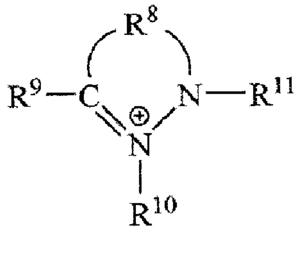

(2-C)

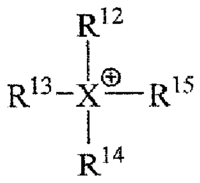

(2-D)

In Formula (2-A), $R^1$ represents a hydrocarbon group having 4 to 10 carbon atoms (preferably a hydrocarbon group having 4 to 8 carbon atoms, and more preferably a hydrocarbon group having 4 to 6 carbon atoms) and may contain a hetero atom, and $R^2$ and $R^3$ are the same as or different from each other and represent a hydrogen atom or a hydrocarbon group having 1 to 12 carbon atoms (preferably a hydrocarbon group having 1 to 8 carbon atoms, more preferably a hydrocarbon group having 2 to 6 carbon atoms, and still more preferably a hydrocarbon group having 2 to 4 carbon atoms) and may contain a hetero atom. However, when a nitrogen atom forms a double bond with an adjacent carbon atom, $R^3$ is not present.

$R^4$ in Formula (2-B) represents a hydrocarbon group having 2 to 10 carbon atoms (preferably a hydrocarbon group having 2 to 8 carbon atoms, and more preferably a hydrocarbon group having 2 to 6 carbon atoms) and may contain a hetero atom, and $R^5$, $R^6$, and $R^7$ are the same as or different from one another and each represent a hydrogen atom or a hydrocarbon group having 1 to 12 carbon atoms (preferably a hydrocarbon group having 1 to 8 carbon atoms, more preferably a hydrocarbon group having 2 to 6 carbon atoms, and still more preferably a hydrocarbon group having 2 to 4 carbon atoms) and may contain a hetero atom.

$R^8$ in Formula (2-C) represents a hydrocarbon group having 2 to 10 carbon atoms (preferably a hydrocarbon group having 2 to 8 carbon atoms, and more preferably a hydrocarbon group having 2 to 6 carbon atoms) and may contain a hetero atom, and $R^9$, $R^{10}$, and $R^{11}$ are the same as or different from one another and each represent a hydrogen atom or a hydrocarbon group having 1 to 16 carbon atoms (preferably a hydrocarbon group having 1 to 10 carbon atoms, and more preferably a hydrocarbon group having 1 to 8 carbon atoms) and may contain a hetero atom.

X in Formula (2-D) represents a nitrogen atom, a sulfur atom, or a phosphorus atom, and $R^{12}$, $R^{13}$, $R^{14}$, and $R^{15}$ are the same as or different from one another and each represent a hydrocarbon group having 1 to 16 carbon atoms (preferably a hydrocarbon group having 1 to 14 carbon atoms, more preferably a hydrocarbon group having 1 to 10 carbon atoms, still more preferably a hydrocarbon group having 1 to 8 carbon atoms, and particularly preferably a hydrocarbon group having 1 to 6 carbon atoms), and may contain a hetero atom. However, when X is a sulfur atom, $R^{12}$ is not present.

A molecular weight of the cation in the ionic liquid is, for example, 500 or less, preferably 400 or less, more preferably 300 or less, still more preferably 250 or less, particularly preferably 200 or less, and most preferably 160 or less. The molecular weight of the cation in the ionic liquid is usually 50 or more. It is considered that the cation in the ionic liquid has a property of moving to a cathode side in the electrically debondable adhesive layer to be biased to the vicinity of an interface between the electrically debondable adhesive layer and the adherend, when the voltage is applied. Thus, in the present invention, the adhesive force during the voltage application is reduced with respect to the initial adhesive force, and the electrical debondability is generated. The cation having a small molecular weight, such as a molecular weight of 500 or less, facilitates the movement of the cation to the cathode side in the electrically debondable adhesive layer, and is suitable for increasing the rate of the decrease in adhesive force at the time of the voltage application.

Examples of a commercially available product of the ionic liquid include "Elexcel AS-110", "Elexcel MP-442", "Elexcel IL-210", "Elexcel MP-471", "Elexcel MP-456", and "Elexcel AS-804" manufactured by Dai-ichi Kogyo Seiyaku Co., Ltd., "HMI-FSI" manufactured by Mitsubishi Materials Corporation, and "CIL-312" and "CIL-313" manufactured by Japan Calit Co., Ltd.

Ionic conductivity is preferably 0.1 mS/cm or more and 10 mS/cm or less. An upper limit of the ionic conductivity is more preferably 5 mS/cm, and still more preferably 3 mS/cm, and a lower limit thereof is more preferably 0.3 mS/cm, and still more preferably 0.5 mS/cm. When the ionic conductivity is in this range, the adhesive force is sufficiently reduced even at a low voltage. The ionic conductivity can be measured by an AC impedance method using, for example, a 1260 frequency response analyzer manufactured by Solartron.

A content (blending amount) of the ionic liquid in the adhesive composition of the present embodiment is preferably 0.5 parts by mass or more with respect to 100 parts by mass of the polymer from the viewpoint of reducing the adhesive force during the voltage application, and is preferably 30 parts by mass or less from the viewpoint of increasing the initial adhesive force. From the same viewpoint, the content is more preferably 20 parts by mass or less, still more preferably 15 parts by mass or less, particularly preferably 10 parts by mass or less, and most preferably 5 parts by mass or less. The content is more preferably 0.6 parts by mass or more, still more preferably 0.8 parts by mass or more, particularly preferably 1.0 parts by mass or more, and most preferably 1.5 parts by mass or more.

(Other Components)

The adhesive composition of the present embodiment may contain one or more kinds of components (hereinafter, may be referred to as "other components") other than the polymer and the ionic liquid as necessary, as long as the effects of the present invention are not impaired. Hereinafter, the other components that may be contained in the adhesive composition of the present embodiment will be described.

The adhesive composition of the present embodiment may contain an ionic additive. As the ionic additive, for example, an ionic solid can be used.

The ionic solid is the ionic material that is the solid at 25°C. The ionic solid is not limited, but for example, a solid ionic material can be used among the ionic materials obtained by combining the anion and the cation exemplified in the description of the ionic liquid described above. When the adhesive composition contains the ionic solid, a content of the ionic solid is preferably 0.5 parts by mass or more and 10 parts by mass or less with respect to 100 parts by mass of the polymer.

The adhesive composition of the present embodiment may contain a crosslinking agent, if necessary, for the purpose of improving a creep property and a shear property by crosslinking the polymer. Examples of the crosslinking agent include an isocyanate-based crosslinking agent, a carbodiimide-based crosslinking agent, an epoxy-based crosslinking agent, a melamine-based crosslinking agent, a peroxide-based crosslinking agent, a urea-based crosslinking agent, a metal alkoxide-based crosslinking agent, a metal chelate-based crosslinking agent, a metal salt-based crosslinking agent, an oxazoline-based crosslinking agent, an aziridine-based crosslinking agent, and an amine-based crosslinking agent. Examples of the isocyanate-based crosslinking agent include toluene diisocyanate and methylene bisphenyl isocyanate. Examples of the epoxy-based crosslinking agent include N,N,N',N'-tetraglycidyl-m-xylylenediamine, diglycidylaniline, 1,3-bis(N,N-diglycidylaminomethyl)cyclohexane, and 1,6-hexanediol diglycidyl ether. When the crosslinking agent is contained, a content of the crosslinking agent is preferably 0.1 parts by mass or more and 50 parts by mass or less with respect to 100 parts by mass of the polymer. The crosslinking agents may be used alone or in combination of two or more kinds thereof.

The adhesive composition of the present embodiment may contain a polyethylene glycol as necessary for the

purpose of facilitating the movement of the ionic liquid when the voltage is applied. The polyethylene glycol having a number average molecular weight of 200 to 6,000 can be used. When the polyethylene glycol is contained, a content of the polyethylene glycol is preferably 0.1 parts by mass or more and 30 parts by mass or less with respect to 100 parts by mass of the polymer.

The adhesive composition of the present embodiment may contain an electrically conductive filler as necessary for the purpose of imparting the electrical conductivity to the adhesive composition. The electrically conductive filler is not limited, and a commonly known or commonly used electrically conductive filler can be used. For example, graphite, carbon black, carbon fiber, and metal powder of silver, copper, or the like can be used. When the electrically conductive filler is contained, a content of the electrically conductive filler is preferably 0.1 parts by mass or more and 200 parts by mass or less with respect to 100 parts by mass of the polymer.

The adhesive composition of the present embodiment may further contain various additives such as a filler, a plasticizer, an anti-aging agent, an antioxidant, a pigment (dye), a flame retardant, a solvent, a surfactant (leveling agent), a rust inhibitor, a tackifier resin, a corrosion inhibitor, and an antistatic agent. A total content of these components is not limited as long as the effects of the present invention are exhibited, but is preferably 0.01 parts by mass or more and 20 parts by mass or less, more preferably 10 parts by mass or less, and still more preferably 5 parts by mass or less with respect to 100 parts by mass of the polymer.

Examples of the filler include silica, iron oxide, zinc oxide, aluminum oxide, titanium oxide, barium oxide, magnesium oxide, calcium carbonate, magnesium carbonate, zinc carbonate, pyrophyllite clay, kaolin clay, and calcined clay.

As the plasticizer, a known and commonly used plasticizer used in general resin compositions and the like can be used, and for example, oils such as paraffin oil and process oil, liquid rubbers such as liquid polyisoprene, liquid polybutadiene, and liquid ethylene-propylene rubber, tetrahydrophthalic acid, azelaic acid, benzoic acid, phthalic acid, trimellitic acid, pyromellitic acid, adipic acid, sebacic acid, fumaric acid, maleic acid, itaconic acid, citric acid, and derivatives thereof, dioctyl phthalate (DOP), dibutyl phthalate (DBP), dioctyl adipate, diisononyl adipate (DINA), and isodecyl succinate can be used.

Examples of the anti-aging agent include hindered phenol-based compounds, and aliphatic or aromatic hindered amine-based compounds.

Examples of the antioxidant include butyl hydroxytoluene (BHT) and butyl hydroxyanisole (BHA).

Examples of the pigment include inorganic pigments such as titanium dioxide, zinc oxide, ultramarine, red iron oxide, lithopone, lead, cadmium, iron, cobalt, aluminum, hydrochloride, and sulfate, and organic pigments such as azo pigments and copper phthalocyanine pigments.

Examples of the rust inhibitor include zinc phosphate, tannic acid derivatives, phosphate esters, basic sulfonates, and various rust inhibiting pigments.

Examples of the tackifier include a titanium coupling agent and a zirconium coupling agent.

Examples of the antistatic agent typically include quaternary ammonium salts, or hydrophilic compounds such as polyglycolic acid and ethylene oxide derivatives.

Examples of the tackifier resin include a rosin-based tackifier resin, a terpene-based tackifier resin, a phenol-based tackifier resin, a hydrocarbon-based tackifier resin, a ketone-based tackifier resin, a polyamide-based tackifier resin, an epoxy-based tackifier resin, and an elastomer-based tackifier resin. The tackifier resins may be used alone or in combination of two or more.

Examples of the corrosion inhibitor include a carbodiimide compound, an adsorptive inhibitor, and a chelate forming type metal deactivator, and for example, those described in JP2019-059908A can be used.

<Initial Adhesive Force and Rate of Decrease in Adhesive Force due to Application of Voltage>

The adhesive force of the electrically debondable adhesive layer of the present embodiment can be evaluated by various methods, and can be evaluated by, for example, a 180° peeling test described in Examples.

The electrically debondable adhesive layer of the present embodiment has an initial adhesive force of preferably 2.0 N/cm or more, more preferably 2.5 N/cm or more, and most preferably 3.0 N/cm or more, as measured by forming an electrically debondable adhesive sheet as described in Examples and performing the 180° peeling test. When the initial adhesive force is 3.0 N/cm or more, adhesion to the adherend is sufficient, and the adherend is less likely to be debonded or displaced.

The applied voltage is preferably 1 V or more, more preferably 3 V or more, still preferably 5 V or more, yet still more preferably 6 V or more, and even still more preferably 10V or more. The voltage is preferably 500 V or less, more preferably 300 V or less, still more preferably 100 V or less, and particularly preferably 50 V or less.

A voltage application time is preferably 300 seconds or less, more preferably 180 seconds or less, still more preferably 120 seconds or less, yet still more preferably 60 seconds or less, and particularly preferably 30 seconds or less. In such a case, workability is excellent. The shorter application time is more preferable, but the applied time is

usually 1 second or more.

The adhesive composition according to the embodiment of the present invention is not limited, but can be produced by appropriately stirring and mixing the polymer, the ionic liquid, the additive, and optionally the crosslinking agent, the polyethylene glycol, the electrically conductive filler, and the like.

A thickness of the electrically debondable adhesive layer 1 is preferably 1 μm or more and 1,000 μm or less from the viewpoint of the initial adhesive force. An upper limit of the thickness of the electrically debondable adhesive layer 1 is more preferably 500 μm, still more preferably 300 μm, still more preferably 200 μm, still more preferably 150 μm, still more preferably 100 μm, still more preferably 80 μm, yet still more preferably 70 μm, even still more preferably 60 μm, and even yet still more preferably 50 μm, and a lower limit of the thickness is more preferably 5 μm, still more preferably 10 μm, yet still more preferably 20 μm, even still more preferably 30 μm.

A thickness of the electrically debondable adhesive sheet according to the present embodiment is preferably 20 μm or more and 3,000 μm or less. An upper limit of the thickness is more preferably 1,000 μm, still more preferably 500 μm, still more preferably 300 μm, still more preferably 250 μm, yet still more preferably 200 μm, even still more preferably 150 μm, and even yet still more preferably 100 μm, and a lower limit of the thickness is more preferably 30 μm, and still more preferably 50 μm.

In particular, in the case of the electrically debondable adhesive sheets X1 and X2 shown in FIGs. 1 and 2, a thickness of each of the electrically debondable adhesive sheets is preferably 50 μm or more and 2,000 μm or less. An upper limit of the thickness is more preferably 1,000 μm, still more preferably 500 μm, still more preferably 300 μm, yet still more preferably 250 μm, even still more preferably 200 μm, and even yet still more preferably 150 μm, and a lower limit of the thickness is preferably 50 μm, more preferably 80 μm, and still more preferably 100 μm.

In particular, in the case of the electrically debondable adhesive sheets X3, X4, and X5 shown in FIGs. 3 to 5, a thickness of each of the electrically debondable adhesive sheets is preferably 100 μm or more and 3,000 μm or less. An upper limit of the thickness is more preferably 1,000 μm, still more preferably 500 μm, still more preferably 300 μm, yet still more preferably 250 μm, even still more preferably 200 μm, and even yet still more preferably 150 μm, and a lower limit of the thickness is more preferably 50 μm, still more preferably 80 μm, and yet still more preferably 100 μm.

When the electrically debondable adhesive sheet according to the present embodiment includes the electrically debondable adhesive layer and another adhesive layer, surfaces of the electrically debondable adhesive layer and the other adhesive layer may be protected by separators (release liner). The separator is not limited, but examples thereof include a release liner in which a surface of a substrate (liner substrate) such as paper or a plastic film is subjected to a silicone treatment, and a release liner in which a surface of a substrate (liner substrate) such as paper or a plastic film is laminated with a polyolefin-based resin. A thickness of the separator is not limited, but is preferably 10 μm or more, more preferably 20 μm or more, and still more preferably 30 μm or more, and is preferably 100 μm or less, more preferably 80 μm or less, and still more preferably 50 μm or less.

(Method for Producing Electrically Debondable Adhesive Sheet)

As a method for producing the electrically debondable adhesive sheet according to the present embodiment, a known or commonly used production method can be used.

Examples of a method for forming the electrically debondable adhesive layer in the electrically debondable adhesive sheet according to the present embodiment includes a method in which a solution in which the adhesive composition of the present embodiment is dissolved in a solvent as necessary is applied onto the separator and dried and/or cured to form the electrically debondable adhesive layer. When another adhesive layer is provided, examples of a method for forming the other adhesive layer include a method in which a solution in which an adhesive composition containing neither the ionic liquid nor the additive is dissolved in a solvent as necessary is applied onto the separator, and dried and/or cured. As the solvent and the separator, those described above can be used.

In the coating, a commonly used coater (for example, a gravure roll coater, a reverse roll coater, a kiss roll coater, a dip roll coater, a bar coater, a knife coater, or a spray roll coater) can be used.

The electrically debondable adhesive layer and the other adhesive layer can be produced by the above method, and the electrically debondable adhesive sheet according to the present embodiment can be produced by appropriately laminating the electrically conductive substrate, the coating layer, the electrically debondable adhesive layer, and optionally the other adhesive layer.

Instead of the separator, the coating layer may be used, and the electrically debondable adhesive layer may be formed by applying the adhesive composition.

(Method for Electrically Debonding Electrically Debondable Adhesive Sheet)

Debonding of the electrically debondable adhesive sheet according to the present embodiment from the adherend can be performed by applying the voltage to the electrically debondable adhesive layer to generate a potential

difference in a thickness direction of the electrically debondable adhesive layer.

For example, a joined body obtained by attaching the electrically debondable adhesive sheet X1 or X2 to an electrically conductive adherend can be debonded by energizing the electrically conductive adherend and applying the voltage to the electrically debondable adhesive layer.

For example, in the case of the electrically debondable adhesive sheets X3 to X5, both the electrically conductive layers are energized, and the voltage is applied to the electrically debondable adhesive layer, so that the sheets can be debonded from the adherend.

The energization is preferably performed by connecting terminals to one end and the other end of the electrically debondable adhesive sheet so that the voltage is applied to the entire electrically debondable adhesive layer. When the adherend includes the metal adherend surface, the one end and the other end may be a part of the adherend including the metal adherend surface. At the time of debonding, the voltage may be applied after water is added to an interface between an adherend surface of the electrically conductive adherend and the electrically debondable adhesive layer.

(Applications of Electrically Debondable Adhesive Sheet)

As a re-debonding technique in the related art, there are an adhesive layer that is cured by ultraviolet (UV) irradiation and debonded, and an adhesive layer that is debonded by heat. An electrically debondable adhesive sheet using such an adhesive layer cannot be used when the ultraviolet (UV) irradiation is difficult to perform or a member as an adherend is damaged by the heat. The electrically debondable adhesive sheet according to the present embodiment including the electrically debondable adhesive layer does not use the ultraviolet rays or the heat, and thus, the debonding can be easily performed by applying the voltage without damaging the member as the adherend. Therefore, the electrically debondable adhesive sheet according to the present embodiment is suitable for use in fixing, to a housing, a secondary battery (for example, a lithium ion battery pack) used in a mobile terminal such as a smartphone, a mobile phone, a notebook computer, a video camera, or a digital camera.

Examples of a rigid member to be joined by the electrically debondable adhesive sheet according to the present embodiment include a silicon substrate for a semiconductor wafer, a sapphire substrate, a SiC substrate, and a metal base substrate for LED, a TFT substrate and a color filter substrate for a display, and a base substrate for an organic EL panel. Examples of a fragile member to be joined by the double-sided electrically debondable adhesive sheet include a semiconductor substrate such as a compound semiconductor substrate, a silicon substrate for MEMS devices, a passive matrix substrate, a surface cover glass for smartphones, an OGS (One Glass Solution) substrate in which a touch panel sensor is attached to the cover glass, an organic substrate and an organic-inorganic hybrid substrate containing silsesquioxane or the like as a main component, a flexible glass substrate for flexible displays, and graphene sheets.

[Joined Body] The joined body according to the embodiment of the present invention is a joined body including the electrically debondable adhesive sheet according to the embodiment of the present invention and the electrically conductive material, in which the electrically debondable adhesive layer in the electrically debondable adhesive sheet is allowed to bond to the electrically conductive material.

The electrically conductive material is preferably the adherend including the metal adherend surface, and examples of the adherend including the metal adherend surface include an adherend formed of a metal containing aluminum, copper, iron, magnesium, tin, gold, silver, lead, or the like as a main component, and among these, a metal containing aluminum is preferable.

Examples of the joined body according to the present embodiment include a joined body in which the electrically debondable adhesive sheet X1 and a side on the electrically debondable adhesive layer 1 of the electrically debondable adhesive sheet X1 are allowed to bond to the electrically conductive adherend including, for example, a metal adherend surface.

When the electrically debondable adhesive sheet according to the embodiment of the present invention further includes another adhesive layer, a second electrically conductive substrate, and a second another adhesive layer, the another adhesive layer is formed on a surface of the supporting substrate on a side opposite to the electrically conductive layer, the second electrically conductive substrate and the second another adhesive layer are formed in this order on a surface of the electrically debondable adhesive layer on a side opposite to the coating layer, and the electrically debondable adhesive layer and the second electrically conductive substrate are in contact with each other, another aspect of the joined body according to the embodiment of the present invention is a joined body including the electrically debondable adhesive sheet according to the embodiment of the present invention and an adherend material, in which the another adhesive layer is allowed to bond to the adherend material. The adherend material is selected from an electrically conductive material and an electrically non-conductive material.

Examples of the joined body according to the present embodiment include a joined body in which the other adhesive layers 6 on both surfaces of the electrically debondable adhesive sheet X3 are allowed to bond to the electrically conductive material including, for example, a metal adherend surface, and a joined body in which one of the other

adhesive layers 6 of the electrically debondable adhesive sheet X3 is attached to the electrically non-conductive material.

EXAMPLES

Hereinafter, the present invention will be described in more detail with reference to Examples, but the present invention is not limited to these Examples. A weight average molecular weight to be described below is measured by the method described above by gel permeation chromatography (GPC).

(Preparation of Acrylic Polymer 1 Solution)

87 parts by mass of n-butyl acrylate (BA), 10 parts by mass of 2-methoxyethyl acrylate (MEA), and 3 parts by mass of acrylic acid (AA) as the monomer components, and 150 parts by mass of ethyl acetate as the polymerization solvent were put into a separable flask, and stirred for 1 hour while introducing a nitrogen gas. After oxygen in the polymerization system was removed in this manner, 0.2 parts by mass of 2,2'-azobisisobutyronitrile (AIBN) was added as the polymerization initiator, and the mixture was heated to 63°C and allowed to react for 6 hours. Thereafter, ethyl acetate was added to obtain an acrylic polymer 1 solution containing a solid content concentration of 30% by mass. A weight average molecular weight of the obtained acrylic polymer 1 was 700,000.

(Preparation of Acrylic Polymer 2 Solution)

95 parts by mass of n-butyl acrylate (BA) as the monomer component, 5 parts by mass of acrylic acid (AA), and 150 parts by mass of ethyl acetate as the polymerization solvent were put into a separable flask, and stirred for 1 hour while introducing a nitrogen gas. After oxygen in the polymerization system was removed in this manner, 0.2 parts by mass of 2,2'-azobisisobutyronitrile (AIBN) was added as the polymerization initiator, and the mixture was heated to 63°C and allowed to react for 6 hours. Thereafter, ethyl acetate was added to obtain an acrylic polymer 2 solution containing a solid content concentration of 30% by mass. A weight average molecular weight of the obtained acrylic polymer 2 was 650,000.

[Examples 1 to 7]

(Preparation of Electrically Debondable Adhesive Layer)

The crosslinking agent, the ionic liquid, the additives (adsorptive inhibitor and chelate forming type metal deactivator), and ethyl acetate were added to each of the acrylic polymers (solutions) obtained above, and the mixture was stirred and mixed to obtain an adhesive composition (solution) for electrical debonding that was adjusted to a solid content concentration of 25% by mass.
Blending amounts of the respective components are shown in Tables 1 and 3.
A value of each of the components in the following Tables 1 and 3 means parts by mass. The same applies to Tables 2 and 4.
The obtained adhesive composition (solution) for electrical debonding was applied using an applicator onto a debond-treated surface of a polyethylene terephthalate separator (trade name: "MRF38", manufactured by Mitsubishi Plastics, Inc.) in which a surface had been debond-treated so as to have a uniform thickness. Next, heating and drying were performed at 150°C for 3 minutes, and the debond-treated surface of the polyethylene terephthalate separator (trade name: "MRE38", manufactured by Mitsubishi Plastics, Inc.) in which the surface had been debond-treated was laminated on the adhesive using a hand roller to obtain an electrically debondable adhesive layer having a thickness of 50 μm.
Abbreviations of the ionic liquid, the crosslinking agent, the adsorptive inhibitor, and the chelate forming type metal deactivator in Tables 1 and 3 are as follows. The same applies to Tables 2 and 4.

(Ionic Liquid)

AS-110: cation: 1-ethyl-3-methylimidazolium cation, anion: bis(fluorosulfonyl)imide anion, trade name: "Elexcel AS-110", manufactured by Dai-ichi Kogyo Seiyaku Co., Ltd.

(Crosslinking Agent)

V-05: polycarbodiimide resin, trade name: "Carbodilite V-05", manufactured by Nisshinbo Chemical Inc.

(Adsorptive Inhibitor)

AMINE O: 2-(8-heptadecene-1-yl)-4,5-dihydro-1H-imidazole-1-ethanol, trade name: "AMINE O", manufactured by BASF Japan Ltd.
Irgacor DSSG: sodium sebacate, trade name: "Irgacor DSSG", manufactured by BASF Japan Ltd.

(Chelate Forming Type Metal Deactivator)

Irgamet 30: N,N-bis(2-ethylhexyl)-[(1,2,4-triazole-1-yl)methyl]amine, trade name: "Irgamet 30", manufactured by BASF Japan Ltd.

(Preparation of Single-sided Electrically Debondable Adhesive Sheet)

A polyethylene terephthalate separator (MRE38) of the obtained electrically debondable adhesive layer was debonded, and a surface on a coating layer side of a film including a metal layer (electrically conductive substrate) (trade name: "1005CR", manufactured by Toray Engineering Co., Ltd., thickness: 12 μm) that was a laminate (laminate 8) in which the coating layer, an electrically conductive layer (metal layer), and the supporting substrate were laminated in this order, was attached to an exposed surface of the electrically debondable adhesive layer to obtain a single-sided electrically debondable adhesive sheet.

(Preparation of Three-layer Double-sided Electrically Debondable Adhesive Sheet)

A polyethylene terephthalate separator (MRE38) of each of the obtained electrically debondable adhesive layers (adhesive sheets) prepared in the same manner as described above was debonded, and a surface on a coating layer side of a film including a metal layer (trade name: "1005CR", manufactured by Toray Engineering Co., Ltd., thickness: 12 μm) that was a laminate in which the coating layer, an electrically conductive layer (metal layer), and a supporting substrate were laminated in this order, was attached to an exposed surface of the electrically debondable adhesive layer to obtain a single-sided electrically debondable adhesive sheet. Further, a double-sided tape (trade name: "No. 56405", manufactured by Nitto Denko Corporation) was attached to a surface of the single-sided electrically debondable adhesive sheet on the supporting substrate side, thereby obtaining a three-layer double-sided electrically debondable adhesive sheet in which one surface was an electrically debondable adhesive layer and the other surface was another adhesive layer.

(Preparation of Five-layer Double-sided Electrically Debondable Adhesive Sheet)

A polyethylene terephthalate separator (MRF38) of a three-layer double-sided electrically debondable adhesive sheet prepared in the same manner as described above was debonded, and a surface on an electrically conductive layer side of a film including a metal layer (trade name: "Metalumy 25S", manufactured by Toray Industries, Inc., thickness: 25 μm) that was a laminate in which the electrically conductive layer (metal layer) and a supporting substrate were laminated in this order, was attached to an exposed surface of the electrically debondable adhesive layer, and a double-sided tape (trade name: "No. 56405", manufactured by Nitto Denko Corporation) was further attached to a surface on the supporting substrate side, thereby obtaining a five-layer double-sided electrically debondable adhesive sheet in which both surfaces thereof were other adhesive layers.

(Preparation of Joined Body 1)

A separator (MRF38) of the three-layer double-sided electrically debondable adhesive sheet obtained above was debonded, and a stainless steel plate (SUS316, size: 30 mm × 120 mm) as an electrically conductive adherend was attached to the debonded surface such that one end of the double-sided adhesive sheet protruded from the adherend by about 2 mm, and the double-sided adhesive sheet was pressed with a 2 kg roller reciprocated once, and the resultant laminate was allowed to stand in an environment of23°C for 30 minutes to obtain a joined body 1 in each of Examples 1 to 7 in which the electrically debondable adhesive layer 1 of the electrically debondable adhesive sheet was allowed to bond to the electrically conductive adherend (electrically conductive adherend 7).

(Preparation of Joined Body 2)

A separator (MRF38) of the five-layer double-sided electrically debondable adhesive sheet obtained above was debonded, and an acrylic plate (size: 30 mm × 120 mm) as an adherend 2 was attached to the debonded surface

such that one end of the double-sided adhesive sheet protruded from the adherend by about 2 mm, the double-sided adhesive sheet was pressed with the 2 kg roller reciprocated once and the resultant laminate was allowed to stand in the environment of 23°C for 30 minutes to obtain a joined body 2 in each of Examples 1 to 7 in which the another adhesive layer of the five-layer double-sided electrically debondable adhesive sheet was allowed to bond to the adherend 2.

[Example 8]

(Preparation of Single-sided Electrically Debondable Adhesive Sheet)

An electrically debondable adhesive layer was prepared in the same manner as described above using an adhesive composition for electrical debonding (solution, solid content concentration: 25% by mass) containing the compositions shown in Tables 1 and 3. Further, a polyester resin solution having a solid content concentration of 5% by mass obtained by stirring and mixing 5 parts by mass of a polyester resin (trade name: "Elitel UE9200", manufactured by Unitika Ltd.) and 95 parts by mass of ethyl acetate was applied using a wire bar to a surface on a metal layer side of a film including a metal layer (trade name: "Metalumy TS", manufactured by Toray Industries, Inc., thickness: 50 μm) that was a laminate obtained by laminating an electrically conductive layer (metal layer) and a supporting substrate in this order so as to have a uniform thickness, and a coating layer having a thickness of 100 nm was laminated. A polyethylene terephthalate separator (MRE38) of the obtained electrically debondable adhesive layer was debonded, and a surface on a coating layer side of the film including the metal layer on which the coating layer was laminated was attached to an exposed surface of the electrically debondable adhesive layer to obtain a single-sided electrically debondable adhesive sheet.

(Preparation of Three-layer Double-sided Electrically Debondable Adhesive Sheet)

An electrically debondable adhesive layer was prepared in the same manner as described above using an adhesive composition for electrical debonding (solution, solid content concentration: 25% by mass) containing the compositions shown in Tables 1 and 3.

A polyester resin solution having a solid content concentration of 5% by mass obtained by stirring and mixing 5 parts by mass of a polyester resin (trade name: "Elitel UE9200", manufactured by Unitika Ltd.) and 95 parts by mass of ethyl acetate was applied using a wire bar to a surface on a metal layer side of a film including a metal layer (trade name: "Metalumy TS", manufactured by Toray Industries, Inc., thickness: 50 μm) that was a laminate obtained by laminating an electrically conductive layer (metal layer) and a supporting substrate in this order so as to have a uniform thickness, and a coating layer having a thickness of 100 nm was laminated.

A polyethylene terephthalate separator (MRE38) of the obtained electrically debondable adhesive layer was debonded, and a surface on a coating layer side of the film including the metal layer on which the coating layer was laminated was attached to an exposed surface of the electrically debondable adhesive to obtain a single-sided electrically debondable adhesive sheet.

Further, a double-sided tape (trade name: "No. 56405", manufactured by Nitto Denko Corporation) was attached to a surface of the single-sided electrically debondable adhesive sheet on the supporting substrate side, thereby obtaining a three-layer double-sided electrically debondable adhesive sheet in which one surface was an electrically debondable adhesive layer and the other surface was another adhesive layer.

(Preparation of Five-layer Double-sided Electrically Debondable Adhesive Sheet)

A polyethylene terephthalate separator (MRF38) of a three-layer double-sided electrically debondable adhesive sheet prepared in the same manner as described above was debonded, and a surface on an electrically conductive layer side of a film including a metal layer (trade name: "Metalumy 25S", manufactured by Toray Industries, Inc., thickness: 25 μm) that was a laminate in which the electrically conductive layer (metal layer) and a supporting substrate were laminated in this order, was attached to an exposed surface of the electrically debondable adhesive layer, and a double-sided tape (trade name: "No. 56405", manufactured by Nitto Denko Corporation) was further attached to a surface on the supporting substrate side, thereby obtaining a five-layer double-sided electrically debondable adhesive sheet in which both surfaces thereof were other adhesive layers.

(Preparation of Joined Body 1)

A separator (MRF38) of the three-layer double-sided electrically debondable adhesive sheet obtained above was debonded, and a stainless steel plate (SUS316, size: 30 mm × 120 mm) as an electrically conductive adherend 1 was attached to the debonded surface such that one end of the double-sided adhesive sheet protruded from the adherend

by about 2 mm, and the double-sided adhesive sheet was pressed with the 2 kg roller reciprocated once, and the resultant laminate was allowed to stand in the environment of 23°C for 30 minutes to obtain a joined body 1 in Example 8 in which the electrically debondable adhesive layer 1 of the electrically debondable adhesive sheet was allowed to bond to the electrically conductive adherend 1 (electrically conductive adherend 7 in FIG. 6).

(Preparation of Joined Body 2)

A separator (MRF38) of the five-layer double-sided electrically debondable adhesive sheet obtained above was debonded, and an acrylic plate (size: 30 mm × 120 mm) as an adherend 2 was attached to a debonded surface such that one end of the double-sided adhesive sheet protruded from the adherend by about 2 mm, the double-sided adhesive sheet was pressed with the 2 kg roller reciprocated once and the resultant laminate was allowed to stand in the environment of23°C for 30 minutes to obtain a joined body 2 in Example 8 in which the another adhesive layer of the five-layer double-sided electrically debondable adhesive sheet was allowed to bond to the adherend 2.

[Example 9]

A single-sided electrically debondable adhesive sheet, a three-layer double-sided electrically debondable adhesive sheet, a five-layer double-sided electrically debondable adhesive sheet, and joined bodies 1 and 2 in Example 9 were obtained in the same manner as in Example 8 except that the thickness of the coating layer was changed to 200 nm.

[Example 10]

A single-sided electrically debondable adhesive sheet, a three-layer double-sided electrically debondable adhesive sheet, a five-layer double-sided electrically debondable adhesive sheet, and joined bodies 1 and 2 in Example 10 were obtained in the same manner as in Example 8 except that the thickness of the coating layer was changed to 300 nm.

[Example 11]

A single-sided electrically debondable adhesive sheet, a three-layer double-sided electrically debondable adhesive sheet, a five-layer double-sided electrically debondable adhesive sheet, and bonded bodies 1 and 2 in Example 11 were obtained in the same manner as in Example 9 except that the film including the metal layer used in the preparation of the single-sided electrically debondable adhesive sheet was changed to a film including a metal layer (trade name: "ML PET", manufactured by Mitsui Chemicals, Inc., thickness: 12 μm) that was a laminate obtained by laminating an electrically conductive layer (metal layer) and a supporting substrate in this order.

[Example 12]

A single-sided electrically debondable adhesive sheet, a three-layer double-sided electrically debondable adhesive sheet, a five-layer double-sided electrically debondable adhesive sheet, and joined bodies 1 and 2 in Example 12 were obtained in the same manner as in Example 9 except that the film including the metal layer used in the preparation of the single-sided electrically debondable adhesive sheet was changed to a film including a metal layer (trade name: "ML PET-C", manufactured by Mitsui Chemicals, Inc., thickness: 12 μm) that was a laminate obtained by laminating an electrically conductive layer (metal layer) and a supporting substrate in this order.

[Example 13]

A single-sided electrically debondable adhesive sheet, a three-layer double-sided electrically debondable adhesive sheet, a five-layer double-sided electrically debondable adhesive sheet, and joined bodies 1 and 2 in Example 13 were obtained in the same manner as in Example 1 except that the film including the metal layer used in the preparation of the single-sided electrically debondable adhesive sheet was changed to a film including a metal layer (trade name: "DMS(X42)PC", manufactured by Toray Industries, Inc., thickness: 50 μm) that was a laminate in which a coating layer, an electrically conductive layer (metal layer), and a supporting substrate were laminated in this order.

[Example 14]

A single-sided electrically debondable adhesive sheet, a three-layer double-sided electrically debondable adhesive sheet, a five-layer double-sided electrically debondable adhesive sheet, and joined bodies 1 and 2 in Example

14 were obtained in the same manner as in Example 9 except that the resin used for the coating layer was an acrylic resin (trade name: "ARUFON UH-2170", manufactured by Toagosei Co., Ltd.).

[Example 15]

A single-sided electrically debondable adhesive sheet, a three-layer double-sided electrically debondable adhesive sheet, a five-layer double-sided electrically debondable adhesive sheet, and bonded bodies 1 and 2 in Example 15 were obtained in the same manner as in Example 9 except that the film including the metal layer used in the preparation of the single-sided electrically debondable adhesive sheet was changed to a film including a metal layer (trade name: "AL-PET", manufactured by Panac Co., Ltd., thickness: 50 μm) that was a laminate obtained by laminating an electrically conductive layer (metal layer) and a supporting substrate in this order.

[Example 16]

A film including a metal layer (trade name: "Metalumy TS", manufactured by Toray Advanced Film Co., Ltd., thickness: 50 μm), that was a laminate in which an electrically conductive layer (metal layer (aluminum vapor deposition layer)) and a supporting substrate (polyethylene terephthalate (PET)) were laminated in this order, was prepared.

Next, a Si target (AC: 40 kHz) was attached to an AC sputtering apparatus, and sputtering was performed while introducing an $O_2$ gas and a $N_2$ gas to form an inorganic coating layer (SiNx layer) having a thickness of 50 nm on the metal layer of the film including the metal layer. Accordingly, a substrate A was produced. A temperature of the film including the metal layer at the time of forming the SiNx layer was set to -8°C.

A single-sided electrically debondable adhesive sheet, a three-layer double-sided electrically debondable adhesive sheet, a five-layer double-sided electrically debondable adhesive sheet, and joined bodies 1 and 2 in Example 16 were obtained in the same manner as in Example 1 except that the film including the metal layer used in the preparation of the single-sided electrically debondable adhesive sheet was changed to the substrate A. Example 16 is shown in Tables 2 and 4.

[Example 17]

A film including a metal layer (trade name: "Metalumy TS", manufactured by Toray Advanced Film Co., Ltd., thickness: 50 μm), that was a laminate in which an electrically conductive layer (metal layer (aluminum vapor deposition layer)) and a supporting substrate (polyethylene terephthalate (PET)) were laminated in this order, was prepared.

Next, a nickel (Ni) target was attached to an AC sputtering apparatus (AC: 40 kHz), and sputtering was performed while introducing an Ar gas to form a metal layer (Ni layer) having a thickness of 100 nm on the metal layer of the film including the metal layer. Accordingly, a substrate B was produced. A temperature of the film including the metal layer at the time of forming the Ni layer was set to -8°C.

A single-sided electrically debondable adhesive sheet, a three-layer double-sided electrically debondable adhesive sheet, a five-layer double-sided electrically debondable adhesive sheet, and joined bodies 1 and 2 in Example 17 were obtained in the same manner as in Example 16 except that the substrate A was changed to the substrate B. Example 17 is shown in Tables 2 and 4.

[Comparative Examples 1 to 7]

An electrically debondable adhesive layer was prepared in the same manner as described above using an adhesive composition for electrical debonding (solution, solid content concentration: 25% by mass) containing the compositions shown in Tables 1 and 3, and a single-sided electrically debondable adhesive sheet, a three-layer double-sided electrically debondable adhesive sheet, a five-layer double-sided electrically debondable adhesive sheet, and joined bodies 1 and 2 in Comparative Examples 1 to 7 were obtained in the same manner as in Examples 1 to 7 except that the film including the metal layer used above was changed to a film including a metal layer (trade name: "Metalumy TS", manufactured by Toray Industries, Inc., thickness: 50 μm) that was a laminate in which an electrically conductive layer (metal layer) and a supporting substrate were laminated in this order, and a surface of the film including the metal layer on a metal layer side was attached to an exposed surface of the electrically debondable adhesive.

[Comparative Example 8]

A single-sided electrically debondable adhesive sheet, a three-layer double-sided electrically debondable adhesive sheet, a five-layer double-sided electrically debondable adhesive sheet, and joined bodies 1 and 2 in Comparative Example 8 were obtained in the same manner as in Example 8 except that the film including the metal layer used in the

preparation of the single-sided electrically debondable adhesive sheet was changed to a film including a metal layer (trade name: "ML PET", manufactured by Mitsui Chemicals, Inc., thickness: 12 μm) that was a laminate obtained by laminating an electrically conductive layer (metal layer) and a supporting substrate in this order, and a surface of the film including the metal layer on a metal layer side was attached to a surface of the electrically debondable adhesive layer without providing the coating layer to form the single-sided electrically debondable adhesive sheet.

[Comparative Example 9]

A single-sided electrically debondable adhesive sheet, a three-layer double-sided electrically debondable adhesive sheet, a five-layer double-sided electrically debondable adhesive sheet, and joined bodies 1 and 2 in Comparative Example 8 were obtained in the same manner as in Example 8 except that the film including the metal layer used in the preparation of the single-sided electrically debondable adhesive sheet was changed to a film including a metal layer (trade name: "ML PET-C", manufactured by Mitsui Chemicals, Inc., thickness: 12 μm) that was a laminate obtained by laminating an electrically conductive layer (metal layer) and a supporting substrate in this order, and a surface of the film including the metal layer on a metal layer side was attached to a surface of the electrically debondable adhesive layer without providing the coating layer to form the single-sided electrically debondable adhesive sheet.

[Comparative Example 10]

A single-sided electrically debondable adhesive sheet, a three-layer double-sided electrically debondable adhesive sheet, a five-layer double-sided electrically debondable adhesive sheet, and joined bodies 1 and 2 in Comparative Example 10 were obtained in the same manner as in Example 8 except that the film including the metal layer used in the preparation of the single-sided electrically debondable adhesive sheet was changed to a film including a metal layer (trade name: "AL-PET", manufactured by Panac Co., Ltd., thickness: 50 μm) that was a laminate obtained by laminating an electrically conductive layer (metal layer) and a supporting substrate in this order, and a surface of the film including the metal layer on a metal layer side was attached to a surface of the electrically debondable adhesive layer without providing the coating layer to form the single-sided electrically debondable adhesive sheet.

(Adhesive Force)

Examples 1 to 13, 16, and 17 and Comparative Examples 1 to 9 were evaluated.

The prepared joined body 1 was peeled in an arrow direction in FIG. 6 using a peeling tester (trade name: "variable angle peeling tester YSP", manufactured by Asahi Seiko Co., Ltd.), and an adhesive force in the 180° peeling test (tensile speed: 300 mm/min, debond temperature: 23°C) was measured.

The joined body 2 was peeled off from the electrically debondable adhesive layer 1, and the adhesive force was measured.

(Electrical Debonding Force (Initial))

An electrical debonding force (initial) was measured in the same manner as in the measurement of the adhesive force described above except that a negative electrode and a positive electrode of a DC current machine were attached to positions α and β of the joined body 1 in FIG. 6, respectively, before the peeling was performed, and then the peeling was performed in the arrow direction in FIG. 6 while applying the voltages shown in Table 1 and Table 2.

With regard to the joined body 2, electrodes of the negative electrode and the positive electrode of the DC current machine were attached to each of the two electrically conductive layers of the joined body 2, and the joined body 2 was peeled off from the electrically debondable adhesive layer 1 while applying the voltages shown in Tables 1 and 2, and the electrical debonding force (initial) was measured.

(Electrical Debonding Force (60°C/90% RH 24 hr))

The joined bodies 1 and 2 were stored in a thermo-hygrostat at 60°C and 90% RH for 24 hours, and after being taken out, the joined bodies 1 and 2 were left to stand at 22°C and 50% RH for 30 minutes in order to cool heat. Thereafter, the electrical debonding force (60/90 24 hr) was measured in the same manner as in the measurement of the adhesive force described above.

In the measurement of the electrical debonding force, a debonded surface of the joined body 1 on an adherend 1 side and a debonded surface of the joined body 2 on an adherend 2 side were confirmed. The case where the metal layer debonded from the electrically debondable adhesive layer and the supporting substrate remained on the adherend surface and vapor deposition debonding occurred was evaluated as "vapor deposition debonding".

Obtained results are shown in Tables 1 and 2.

[Table 1]

Table 1

| | | Composition | | | | | | | Electrically conductive substrate | Coating layer Resin | Thickness of coating (nm) | Joined body 1 | | | | Joined body 2 | | | |
|---|---|---|---|---|---|---|---|---|---|---|---|---|---|---|---|---|---|---|---|
| | | Acrylic polymer | | Ionic liquid | Crosslinking agent | Adsorptive inhibitor | | Chelate forming type metal deactivator | | | | Electrical debonding force [N/cm] | | | | Electrical debonding force [N/cm] | | | |
| | | | | | | | | | | | | 30V 60sec | | 50V 60sec | | 30V 60sec | | 50V 60sec | |
| | | 1 | 2 | AS-110 | V-05 | AMINE O | Irgacor DSSG | Irgamet 30 | | | | Initial | 60/90 24hr | Initial | 60/90 24hr | Initial | 60/90 24hr | Initial | 60/90 24hr |
| Example | 1 | 100 | | 4 | 0.4 | 3 | 0.3 | 0.8 | 1005CR | Polyester | 200 | 0.1 | 0.2 | 0.1 | 0.2 | 0.2 | 0.2 | 0.2 | 0.2 |
| | 2 | 100 | | 4 | 0.4 | | | | 1005CR | | | 0.1 | 0.2 | 0.1 | 0.2 | 0.2 | 0.2 | 0.2 | 0.2 |
| | 3 | 100 | | 4 | 0.1 | 3 | | | 1005CR | | | 0.1 | 0.2 | 0.1 | 0.2 | 0.2 | 0.2 | 0.2 | 0.2 |
| | 4 | 100 | | 4 | 0.1 | | 0.3 | | 1005CR | | | 0.1 | 0.2 | 0.1 | 0.2 | 0.2 | 0.2 | 0.2 | 0.2 |
| | 5 | 100 | | 4 | 0.1 | | | 0.8 | 1005CR | | | 0.1 | 0.2 | 0.1 | 0.2 | 0.2 | 0.2 | 0.2 | 0.2 |
| | 6 | 100 | | 2 | 0.4 | 3 | 0.3 | 0.8 | 1005CR | | | 0.1 | 0.2 | 0.1 | 0.2 | 0.2 | 0.2 | 0.2 | 0.2 |
| | 7 | | 100 | 5 | 0.2 | 3 | 0.3 | 0.8 | 1005CR | | | 0.1 | 1.7 | 0.1 | 0.5 | 0.2 | 1.7 | 0.2 | 0.5 |
| | 8 | 100 | | 4 | 0.4 | 3 | 0.3 | 0.8 | Metalumy TS | Polyester | 100 | 0.1 | 0.1 | 0.1 | 0.1 | 0.2 | 0.2 | 0.2 | 0.2 |
| | 9 | 100 | | 4 | 0.4 | 3 | 0.3 | 0.8 | Metalumy TS | Polyester | 200 | 0.1 | 0.1 | 0.1 | 0.1 | 0.2 | 0.2 | 0.2 | 0.2 |
| | 10 | 100 | | 4 | 0.4 | 3 | 0.3 | 0.8 | Metalumy TS | Polyester | 300 | 0.1 | 0.1 | 0.1 | 0.1 | 0.2 | 0.2 | 0.2 | 0.2 |
| | 11 | 100 | | 4 | 0.4 | 3 | 0.3 | 0.8 | ML PET | Polyester | 200 | 0.1 | 0.1 | 0.1 | 0.1 | 0.2 | 0.2 | 0.2 | 0.2 |
| | 12 | 100 | | 4 | 0.4 | 3 | 0.3 | 0.8 | ML PET-C | Polyester | 200 | 0.1 | 0.1 | 0.1 | 0.1 | 0.2 | 0.2 | 0.2 | 0.2 |
| | 13 | 100 | | 4 | 0.4 | 3 | 0.3 | 0.8 | DMS (X42) PC | Epoxy | 2000 | 1.5 | 0.5 | 0.1 | 0.3 | 1.5 | 0.5 | 0.2 | 0.3 |

(continued)

| | | Composition | | | | | | | Electrically conductive substrate | Coating layer Resin | Thickness of coating (nm) | Joined body 1 | | | | Joined body 2 | | | |
|---|---|---|---|---|---|---|---|---|---|---|---|---|---|---|---|---|---|---|---|
| | | | | | | | | | | | | Electrical debonding force [N/cm] | | | | Electrical debonding force [N/cm] | | | |
| | | Acrylic polymer | | Ionic liquid | Crosslinking agent | Adsorptive inhibitor | | Chelate forming type metal deactivator | | | | 30V 60sec | | 50V 60sec | | 30V 60sec | | 50V 60sec | |
| | | 1 | 2 | AS-110 | V-05 | AMINE O | Irgacor DSSG | Irgamet 30 | | | | Initial | 60/90 24hr | Initial | 60/90 24hr | Initial | 60/90 24hr | Initial | 60/90 24hr |
| Comparative Example | 1 | 100 | | 4 | 0.4 | 3 | 0.3 | 0.8 | Metalumy TS | None | None | 0.1 | Vapor deposition debonding | 0.1 | Vapor deposition debonding | 0.2 | Vapor deposition debonding | 0.2 | Vapor deposition debonding |
| | 2 | 100 | | 4 | 0.4 | | | | Metalumy TS | None | None | 0.1 | Vapor deposition debonding | 0.1 | Vapor deposition debonding | 0.2 | Vapor deposition debonding | 0.2 | Vapor deposition debonding |
| | 3 | 100 | | 4 | 0.1 | 3 | | | Metalumy TS | None | None | 0.1 | Vapor deposition debonding | 0.1 | Vapor deposition debonding | 0.2 | Vapor deposition debonding | 0.2 | Vapor deposition debonding |
| | 4 | 100 | | 4 | 0.1 | | 0.3 | | Metalumy TS | None | None | 0.1 | Vapor deposition debonding | 0.1 | Vapor deposition debonding | 0.2 | Vapor deposition debonding | 0.2 | Vapor deposition debonding |
| | 5 | 100 | | 4 | 0.1 | | | 0.8 | Metalumy TS | None | None | 0.1 | Vapor deposition debonding | 0.1 | Vapor deposition debonding | 0.2 | Vapor deposition debonding | 0.2 | Vapor deposition debonding |

(continued)

| | | Composition | | | | | | | Electrically conductive substrate | Coating layer Resin | Thickness of coating (nm) | Joined body 1 | | | | Joined body 2 | | | |
|---|---|---|---|---|---|---|---|---|---|---|---|---|---|---|---|---|---|---|---|
| | | Acrylic polymer | | Ionic liquid | Crosslinking agent | Adsorptive inhibitor | | Chelate forming type metal deactivator | | | | Electrical debonding force [N/cm] | | | | Electrical debonding force [N/cm] | | | |
| | | | | | | | | | | | | 30V 60sec | | 50V 60sec | | 30V 60sec | | 50V 60sec | |
| | | 1 | 2 | AS-110 | V-05 | AMINE O | Irgacor DSSG | Irgamet 30 | | | | Initial | 60/90 24hr | Initial | 60/90 24hr | Initial | 60/90 24hr | Initial | 60/90 24hr |
| | 6 | 100 | | 2 | 0.4 | 3 | 0.3 | 0.8 | Metalumy TS | None | None | 0.1 | Vapor deposition debonding | 0.1 | Vapor deposition debonding | 0.2 | Vapor deposition debonding | 0.2 | Vapor deposition debonding |
| | 7 | | 100 | 5 | 0.2 | 3 | 0.3 | 0.8 | Metalumy TS | None | None | 0.1 | Vapor deposition debonding | 0.1 | Vapor deposition debonding | 0.2 | Vapor deposition debonding | 0.2 | Vapor deposition debonding |
| | 8 | 100 | | 4 | 0.4 | 3 | 0.3 | 0.8 | ML PET | None | None | 0.1 | Vapor deposition debonding | 0.1 | Vapor deposition debonding | 0.2 | Vapor deposition debonding | 0.2 | Vapor deposition debonding |
| | 9 | 100 | | 4 | 0.4 | 3 | 0.3 | 0.8 | ML PET-C | None | None | 0.1 | Vapor deposition debonding | 0.1 | Vapor deposition debonding | 0.2 | Vapor deposition debonding | 0.2 | Vapor deposition debonding |

[Table 2]

Table 2

| | | Composition | | | | | | Electrically conductive substrate | Coating layer Inorganic matter | Thickness of coating (nm) | Joined body 1 | | | | Joined body 2 | | | |
|---|---|---|---|---|---|---|---|---|---|---|---|---|---|---|---|---|---|---|
| | | Acrylic polymer | Ionic liquid | Crosslinking agent | Adsorptive inhibitor | | Chelate forming type metal deactivator | | | | Electrical debonding force [N/cm] | | | | Electrical debonding force [N/cm] | | | |
| | | | | | | | | | | | 30V 60sec | | 50V 60sec | | 30V 60sec | | 50V 60sec | |
| | | 1 | AS-110 | V-05 | AMINE O | Irgacor DSSG | Irgamet 30 | | | | Initial | 60/90 24hr | Initial | 60/90 24hr | Initial | 60/90 24hr | Initial | 60/90 24hr |
| Example | 16 | 100 | 4 | 0.4 | 3 | 0.3 | 0.8 | Metalumy TS | SiNx | 50 | 0.2 | 0.2 | 0.2 | 0.2 | 0.2 | 0.2 | 0.2 | 0.2 |
| | 17 | 100 | 4 | 0.4 | 3 | 0.3 | 0.8 | Metalumy TS | Ni | 100 | 0.2 | 0.2 | 0.2 | 0.2 | 0.2 | 0.2 | 0.2 | 0.2 |

From the results of Tables 1 and 2, in Comparative Examples 1 to 9 in which no coating layer was provided, the electrically conductive layer (metal layer) was debonded from the supporting substrate (Comparative Examples 1 to 9) when the electrically debondable adhesive sheet is placed in a high temperature and high humidity environment in a state of being attached to the adherend having electrical conductivity and then the electrical debonding was performed. It is considered that the debonding of the metal layer occurred as the ionic liquid contained in the electrically debondable adhesive layer passed through the metal layer when the voltage is applied, and the ionic liquid affected an interaction between the metal layer and the supporting substrate to weaken a bonding force. In Comparative Examples 1 to 9, it was shown that the debonding did not occur at a target interface and a function as the electrically debondable adhesive sheet was not exhibited.

(Accelerated Heating Test (Storage Conditions))

A joined body prepared in the same manner as in Examples 1 and 7 to 17 and Comparative Examples 1 and 7 to 10 was stored in the thermo-hygrostat of 85°C for 800 hours. After the joined body was taken out from the thermo-hygrostat, the joined body was allowed to stand at 22°C and 50% RH for 30 minutes in order to cool heat. Thereafter, an adhesive force (85°C and 800 hr) was measured in the same manner as in the measurement of the adhesive force described above.

During the measurement of the adhesive force, the surface of the adherend was confirmed. A debonding mode of the case where the surface of the adherend was exposed was evaluated as an "adherend interface". A debonding mode of the case where the electrically debondable adhesive layer was transferred and adhered to the surface of the adherend was evaluated as "debonding from a substrate".

Regarding the result of reliability, the "adherend interface" was evaluated as A (pass), and the "debonding from a substrate" was evaluated as B (fail).

Obtained results are shown in Tables 3 and 4.

[Table 3]

Table 3

| | | Composition | | | | | | | Electrically conductive substrate | Coating layer Resin | Thickness of coating (nm) | Joined body 1 | | | | Joined body 2 | | | |
|---|---|---|---|---|---|---|---|---|---|---|---|---|---|---|---|---|---|---|---|
| | | Acrylic polymer | | Ionic liquid | Crosslinking agent | Adsorptive inhibitor | | Chelate forming type metal deactivator | | | | Adhesiveness [N/cm] | | | Reliability | Adhesiveness [N/cm] | | | Reliability |
| | | 1 | 2 | AS-110 | V-05 | AMINE O | Irgacor DSSG | Irgamet 30 | | | | Initial | 85°C 800hr | Debonding mode | | Initial | 85°C 800hr | Debonding mode | |
| Example | 1 | 100 | | 4 | 0.4 | 3 | 0.3 | 0.8 | 1005CR | Polyester | 200 | 8 | 7 | Adherend interface | A | 7 | 7 | Adherend interface | A |
| | 7 | | 100 | 5 | 0.2 | 3 | 0.3 | 0.8 | 1005CR | | | 8 | 8 | Adherend interface | A | 8 | 8 | Adherend interface | A |
| | 8 | 100 | | 4 | 0.4 | 3 | 0.3 | 0.8 | Metalumy TS | Polyester | 100 | 8 | 7 | Adherend interface | A | 7 | 7 | Adherend interface | A |
| | 9 | 100 | | 4 | 0.4 | 3 | 0.3 | 0.8 | Metalumy TS | Polyester | 200 | 8 | 7 | Adherend interface | A | 7 | 7 | Adherend interface | A |
| | 10 | 100 | | 4 | 0.4 | 3 | 0.3 | 0.8 | Metalumy TS | Polyester | 300 | 8 | 7 | Adherend interface | A | 7 | 7 | Adherend interface | A |
| | 11 | 100 | | 4 | 0.4 | 3 | 0.3 | 0.8 | ML PET | Polyester | 200 | 8 | 7 | Adherend interface | A | 7 | 7 | Adherend interface | A |
| | 12 | 100 | | 4 | 0.4 | 3 | 0.3 | 0.8 | ML PET-C | Polyester | 200 | 8 | 7 | Adherend interface | A | 7 | 7 | Adherend interface | A |
| | 13 | 100 | | 4 | 0.4 | 3 | 0.3 | 0.8 | DMS (X42) PC | Epoxy | 2000 | 8 | 7 | Adherend interface | A | 7 | 7 | Adherend interface | A |
| | 14 | 100 | | 4 | 0.4 | 3 | 0.3 | 0.8 | Metalumy TS | Acrylic | 200 | 8 | 7 | Adherend interface | A | 7 | 7 | Adherend interface | A |
| | 15 | 100 | | 4 | 0.4 | 3 | 0.3 | 0.8 | AL-PET (PET with Aluminum foil) | Polyetser | 200 | 8 | 7 | Adherend interface | A | 7 | 7 | Adherend interface | A |

(continued)

| | | Composition | | | | | | | | Electrically conductive substrate | Coating layer Resin | Thickness of coating (nm) | Joined body 1 | | | | Joined body 2 | | | |
|---|---|---|---|---|---|---|---|---|---|---|---|---|---|---|---|---|---|---|---|---|
| | | Acrylic polymer | | Ionic liquid | Crosslinking agent | Adsorptive inhibitor | | Chelate forming type metal deactivator | | | | | Adhesiveness [N/cm] | | | Reliability | Adhesiveness [N/cm] | | | Reliability |
| | | 1 | 2 | AS-110 | V-05 | AMINE O | Irgacor DSSG | Irgamet 30 | | | | | Initial | 85°C 800hr | Debonding mode | | Initial | 85°C 800hr | Debonding mode | |
| Comparative Example | 1 | 100 | | 4 | 0.4 | 3 | 0.3 | 0.8 | | Metalumy TS | None | None | 7 | 3 | Debonding from a substrate | B | 6 | 3 | Debonding from a sub strate | B |
| | 7 | | 100 | 5 | 0.2 | 3 | 0.3 | 0.8 | | Metalumy TS | None | None | 7 | 5 | Debonding from a substrate | B | 7 | 4 | Debonding from a sub strate | B |
| | 8 | 100 | | 4 | 0.4 | 3 | 0.3 | 0.8 | | ML PET | None | None | 7 | 3 | Debonding from a substrate | B | 6 | 3 | Debonding from a sub strate | B |
| | 9 | 100 | | 4 | 0.4 | 3 | 0.3 | 0.8 | | ML PET-C | None | None | 7 | 4 | Debonding from a substrate | B | 6 | 3 | Debonding from a sub strate | B |
| | 10 | 100 | | 4 | 0.4 | 3 | 0.3 | 0.8 | | AL-PET (PET with Aluminum foil) | None | None | 8 | 4 | Debonding from a substrate | B | 7 | 3 | Debonding from a sub strate | B |

[Table 4]

Table 4

| | | Composition | | | | | | | Electrically conductive substrate | Coating layer Inorganic matter | Thickness of coating (nm) | Joined body 1 | | | | Joined body 2 | | | |
|---|---|---|---|---|---|---|---|---|---|---|---|---|---|---|---|---|---|---|---|
| | | Acrylic polymer | | Ionic liquid | Crosslinking agent | Adsorptive inhibitor | | Chelate forming type metal deactivator | | | | Adhesiveness [N/cm] | | | Reliability | Adhesiveness [N/cm] | | | Reliability |
| | | 1 | 2 | AS-110 | V-05 | AMINE O | Irgacor DSSG | Irgamet 30 | | | | Initial | 85°C 800hr | Debonding mode | | Initial | 85°C 800hr | Debonding mode | |
| Example | 16 | 100 | | 4 | 0.4 | 3 | 0.3 | 0.8 | Metalumy TS | SiNx | 50 | 7 | 7 | Adherend interface | A | 7 | 7 | Adherend interface | A |
| | 17 | 100 | | 4 | 0.4 | 3 | 0.3 | 0.8 | Metalumy TS | Ni | 100 | 7 | 7 | Adherend interface | A | 7 | 7 | Adherend interface | A |

From the result shown in Table 3, it can be found that when the electrically debondable adhesive sheet was placed in the high temperature environment in the state of being attached to the adherend having the electrical conductivity, the interfacial adhesive force between the electrically debondable adhesive layer of the electrically debondable adhesive sheet and the electrically conductive adherend was reduced, and as a result, adhesion reliability of the member was reduced (Comparative Examples 1 and 7). It is considered that the decrease in adhesion reliability occurred as, for example, the interfacial adhesive force between the electrically debondable adhesive layer and the electrically conductive adherend decreased due to the thermal curing of the electrically debondable adhesive layer and the debonding occurred in the electrically debondable adhesive sheet.

(Voltage Control Test)

For the joined body 1 prepared in Examples 1, 8 to 10, and 13 to 17 and Comparative Examples 1 and 8 to 10, the voltage was applied to 50V at intervals of 10V in the same manner as in the measurement of the electrical debonding force described above. The applied time was set at intervals of 10 seconds, and an operable range was evaluated.

A case where the electrical debonding force was 2 N/cm or less was evaluated as a case where the debonding performance was exhibited (OK), and a case where the electrical debonding force is more than 2 N/cm was evaluated as a case where no debonding performance was exhibited (NG).

Results obtained in Examples 1, 8 to 10, 13 to 17, and Comparative Example 1 are shown in FIGs. 7 to 11. Numerical values in FIGs. 7 to 11 are measured values. The results obtained in Comparative Examples 8 to 10 were the same as those in Comparative Example 1. The same results as those of the joined body 1 were obtained for the joined body 2.

A case where the conditions under which the debonding performance is exhibited by changing the voltage and the applied time in a measurement range could be controlled was evaluated as A (pass), and a case in which the conditions could not be controlled was evaluated as B (fail). As a result, in Example 1, when the applied time was increased or the applied voltage was increased, NG was changed to OK and the conditions under which the debonding performance was exhibited could be controlled, so that the result was "A", and in Comparative Examples 1 and 8 to 10, all the applied time and applied voltage were OK and the conditions under which the debonding performance was exhibited could not be controlled, so that the result was "B".

From the results of FIGs. 7 to 11, it is shown that in the joined body 1 in Examples 1, 8 to 10, and 13 to 17, the conditions under which the debonding performance was exhibited could be controlled by changing the voltage and the applied time in the measurement range.

There are various situations in which the electrically debondable adhesive sheet is used, and in particular, an intended operation start voltage often varies depending on a customer. It is found that the joined body according to the embodiment of the present invention had the coating layer, and thus, the condition in which the debonding performance according to the purpose was exhibited could be controlled by the voltage and the applied time.

## INDUSTRIAL APPLICABILITY

The present invention allows for providing an electrically debondable adhesive sheet and a joined body that prevent debonding of an electrically conductive layer from a supporting substrate under a high temperature and high humidity environment. The present invention allows for providing an electrically debondable adhesive sheet and a joined body that can prevent a decrease in adhesive force between an electrically debondable adhesive layer and an electrically conductive substrate of the electrically debondable adhesive sheet under a high temperature environment and that can prevent a decrease in adhesive force of the electrically debondable adhesive sheet as a result. The present invention allows for providing an electrically debondable adhesive sheet and a joined body in which conditions such as an applied voltage and an applied time at which debonding performance is exhibited can be controlled depending on a purpose by providing a coating layer on the electrically conductive layer.

While the present invention has been described in detail with reference to specific embodiments, it will be apparent to those skilled in the art that various changes and modifications can be made without departing from the spirit and scope of the present invention.

The present application is based on Japanese Patent Application (Japanese Patent Application No. 2020-135065) filed on August 7, 2020 and Japanese Patent Application (Japanese Patent Application No. 2021-017545) filed on February 5, 2021, and the contents of which are incorporated herein by reference.

## REFERENCE SIGNS LIST

| | |
|---|---|
| X1, X2, X3, X4, X5 | electrically debondable adhesive sheet |
| 1 | electrically debondable adhesive layer |
| 2 | coating layer |
| 3 | electrically conductive layer |
| 4 | supporting substrate |
| 5 | electrically conductive substrate |
| 6 | another adhesive layer |
| 7 | electrically conductive adherend |
| 8 | laminate |

## Claims

**1.** An electrically debondable adhesive sheet comprising, in this order:

an electrically conductive substrate including a supporting substrate and an electrically conductive layer;
a coating layer; and
an electrically debondable adhesive layer in which an adhesive force is reduced by application of a voltage,
wherein the coating layer is formed on a surface of the electrically conductive layer on a side opposite to the supporting substrate, and
wherein the electrically debondable adhesive layer and the coating layer are in contact with each other.

**2.** The electrically debondable adhesive sheet according to claim 1,
wherein the electrically debondable adhesive layer contains a polymer and an ionic liquid.

**3.** The electrically debondable adhesive sheet according to claim 2,
wherein a content of the ionic liquid is 0.5 parts by mass or more and 30 parts by mass or less with respect to 100 parts by mass of the polymer.

**4.** The electrically debondable adhesive sheet according to claim 2 or 3,
wherein an anion of the ionic liquid is at least one selected from the group consisting of a bis(fluorosulfonyl)imide anion and/or a bis(trifluoromethanesulfonyl)imide anion.

**5.** The electrically debondable adhesive sheet according to any one of claims 2 to 4,
wherein a cation of the ionic liquid is at least one selected from the group consisting of a nitrogen-containing onium cation, a sulfur-containing onium cation, and a phosphorus-containing onium cation.

**6.** The electrically debondable adhesive sheet according to any one of claims 1 to 5,
wherein the coating layer contains at least one resin selected from a polyester-based resin, an acrylic resin, an epoxy-based resin, and a urethane-based resin, or at least one inorganic substance selected from SiNx, SiOx, $Al_2O_3$ , Ni, and NiCr.

**7.** The electrically debondable adhesive sheet according to any one of claims 1 to 6, further comprising:

another adhesive layer,
wherein the another adhesive layer is formed on a surface of the supporting substrate on a side opposite to the electrically conductive layer.

**8.** The electrically debondable adhesive sheet according to any one of claims 1 to 6, further comprising:

another adhesive layer;
a second electrically conductive layer; and
a second another adhesive layer,
wherein the another adhesive layer is formed on a surface of the supporting substrate on a side opposite to the electrically conductive layer,
wherein the second electrically conductive layer and the second another adhesive layer are formed in this order on a surface of the electrically debondable adhesive layer on a side opposite to the coating layer, and
wherein the electrically debondable adhesive layer and the second electrically conductive layer are in contact

with each other,
provided that a second coating layer may be provided between the electrically debondable adhesive layer and the second electrically conductive layer such that the second coating layer is in contact with the electrically debondable adhesive layer.

**9.** A joined body comprising:

the electrically debondable adhesive sheet according to any one of claims 1 to 7; and
an electrically conductive material,
wherein the electrically debondable adhesive layer is allowed to bond to the electrically conductive material.

**10.** A joined body comprising:

the electrically debondable adhesive sheet according to claim 8; and
an adherend material,
wherein the another adhesive layer is allowed to bond to the adherend material.

FIG. 1

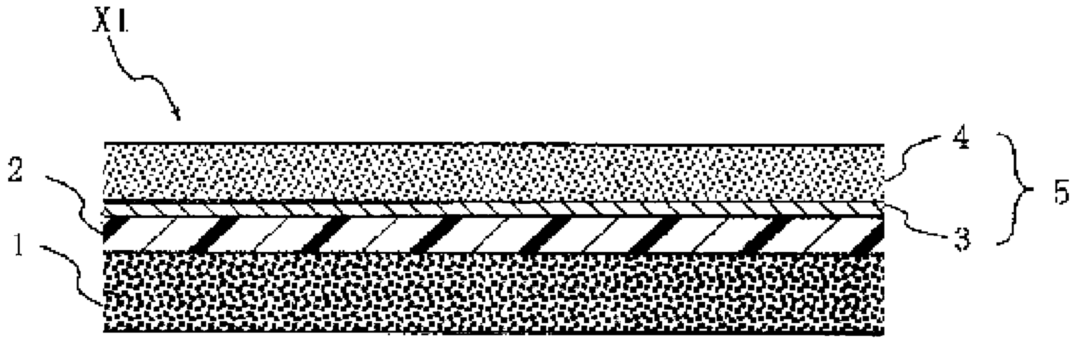


FIG. 2

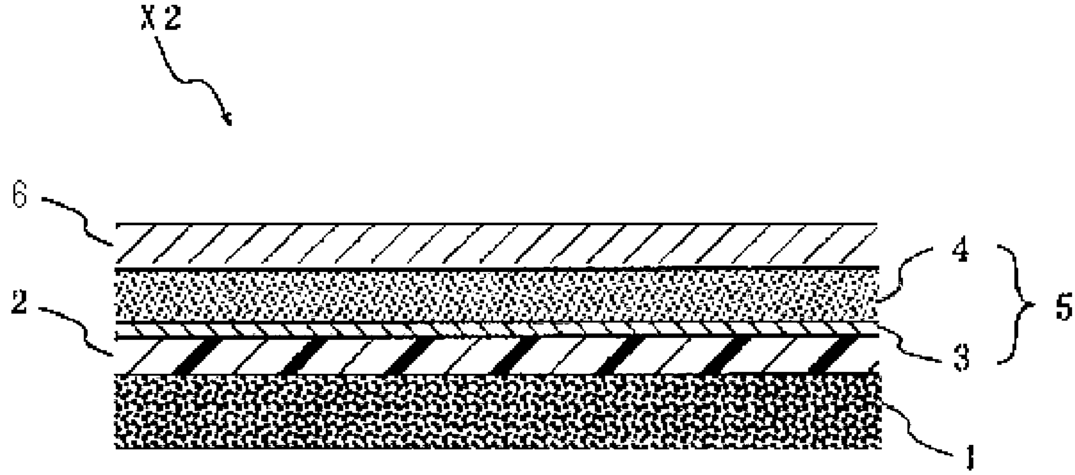

FIG. 3

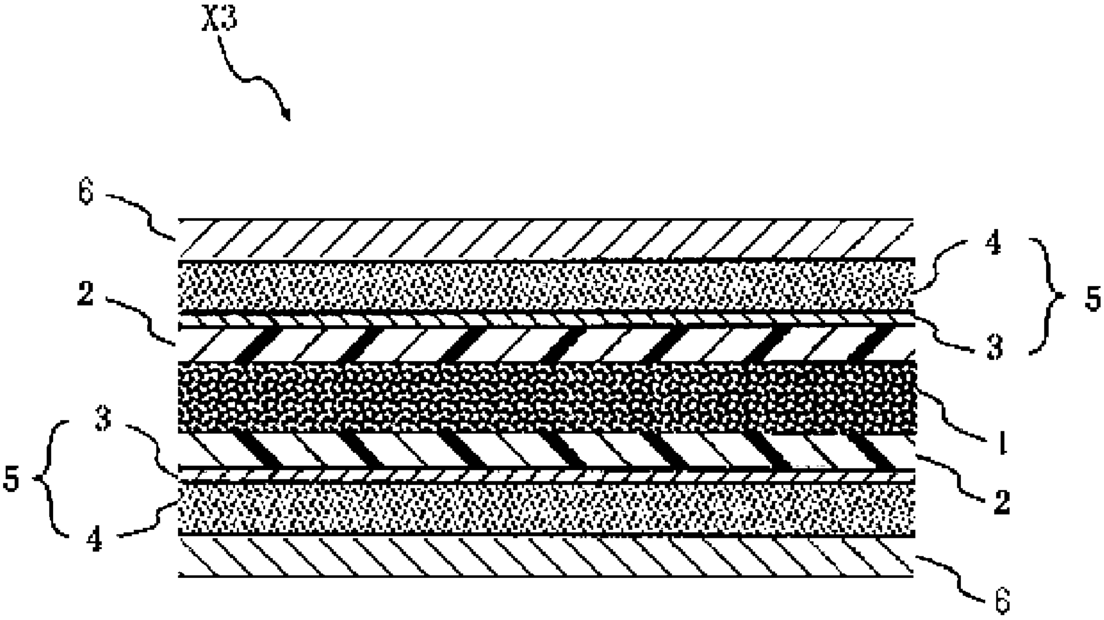


FIG. 4

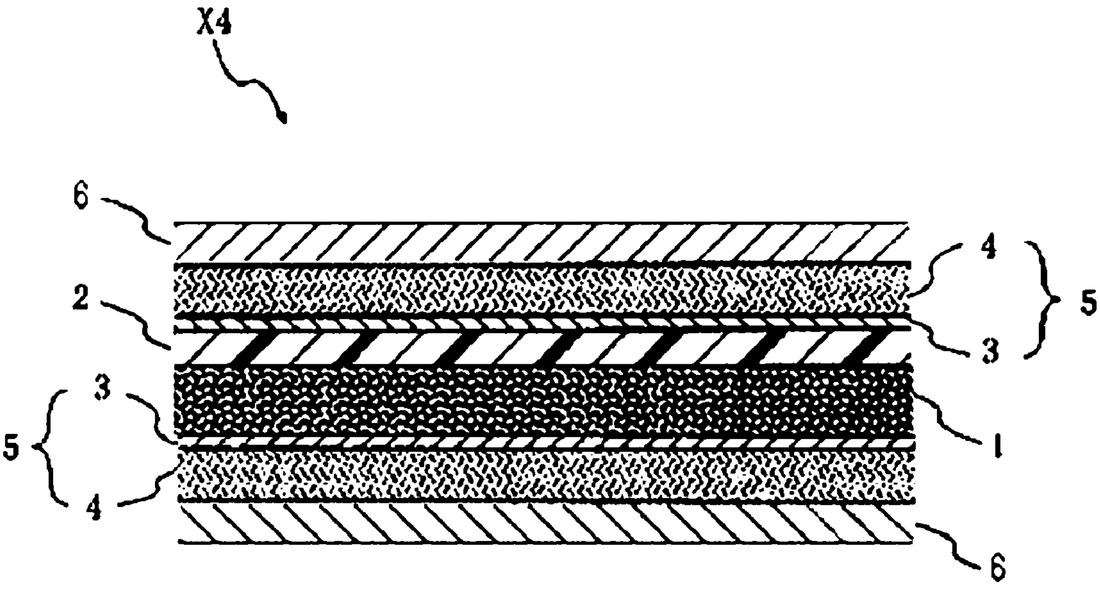

FIG. 5

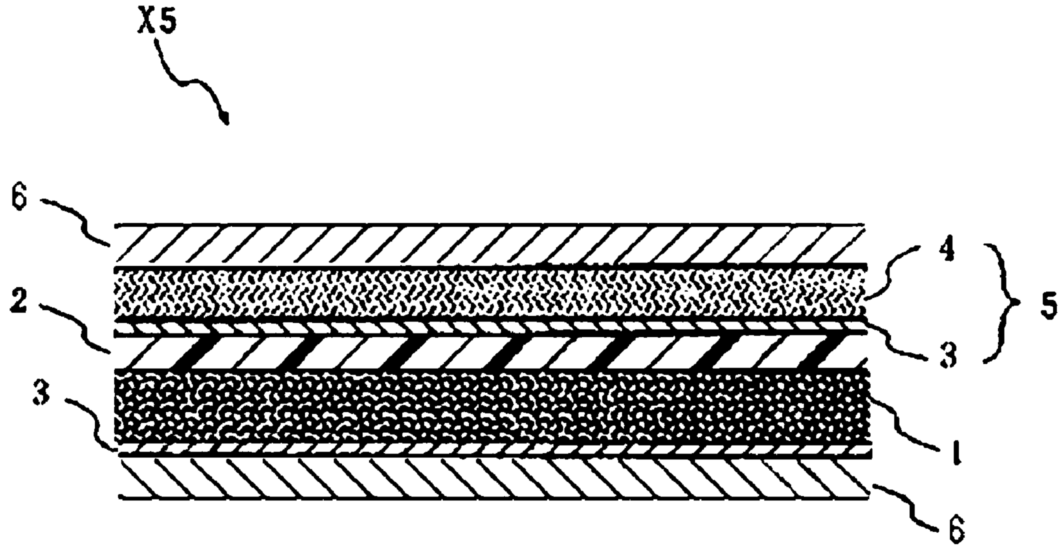


FIG. 6

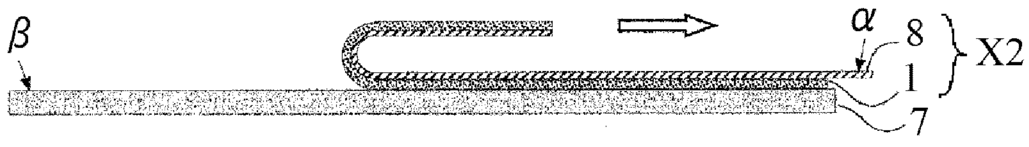

# FIG. 7

**Example 1**

**Coating layer: Polyester (200 nm)**

(N/cm)

| Applied time (s) \ Applied voltage (V) | 10 | 20 | 30 | 40 | 50 |
|---|---|---|---|---|---|
| 60 | 3 NG | 0.1 OK | 0.1 OK | 0.1 OK | 0.1 OK |
| 50 | NG | OK | OK | OK | OK |
| 40 | NG | OK | OK | OK | OK |
| 30 | NG | 1 OK | OK | OK | OK |
| 20 | NG | 3 NG | 0.1 OK | 0.1 OK | OK |
| 10 | NG | NG | 3 NG | 1 OK | 0.1 OK |

**Example 8**

**Coating layer: Polyester (100 nm)**

(N/cm)

| Applied time (s) \ Applied voltage (V) | 10 | 20 | 30 | 40 | 50 |
|---|---|---|---|---|---|
| 60 | 0.1 OK | 0.1 OK | 0.1 OK | 0.1 OK | 0.1 OK |
| 50 | OK | OK | OK | OK | OK |
| 40 | OK | OK | OK | OK | OK |
| 30 | 1 OK | OK | OK | OK | OK |
| 20 | 4 NG | 0.1 OK | OK | OK | OK |
| 10 | NG | 3 NG | 0.1 OK | 0.1 OK | 0.1 OK |

# FIG. 8

**Example 9** — **Coating layer: Polyester (200 nm)**

(N/cm)

| Applied time (s) \ Applied voltage (V) | 10 | 20 | 30 | 40 | 50 |
|---|---|---|---|---|---|
| 60 | 5 NG | 5 NG | 0.1 OK | 0.1 OK | 0.1 OK |
| 50 | NG | NG | OK | OK | OK |
| 40 | NG | NG | OK | OK | OK |
| 30 | NG | NG | 1 OK | 1 OK | OK |
| 20 | NG | NG | 5 NG | 4 NG | OK |
| 10 | NG | NG | 5 NG | 5 NG | 0.1 OK |

**Example 10** — **Coating layer: Polyester (300 nm)**

(N/cm)

| Applied time (s) \ Applied voltage (V) | 10 | 20 | 30 | 40 | 50 |
|---|---|---|---|---|---|
| 60 | 5 NG | 5 NG | 0.1 OK | 0.1 OK | 0.1 OK |
| 50 | NG | NG | 3 NG | 3 NG | OK |
| 40 | NG | NG | NG | NG | 0.4 OK |
| 30 | NG | NG | 5 NG | 5 NG | 3 NG |
| 20 | NG | NG | NG | NG | NG |
| 10 | NG | NG | NG | NG | NG |

# FIG. 9

**Example 13** — **Coating layer: Epoxy (2000 nm)**

(N/cm)

| Applied time (s) \ Applied voltage (V) | 10 | 20 | 30 | 40 | 50 |
|---|---|---|---|---|---|
| 60 | 4<br>NG | 3<br>NG | 1.5<br>OK | 0.1<br>OK | 0.1<br>OK |
| 50 | NG | NG | 2<br>NG | OK | OK |
| 40 | NG | NG | NG | 1<br>OK | 0.1<br>OK |
| 30 | NG | NG | NG | 3<br>NG | 2<br>NG |
| 20 | NG | NG | NG | NG | NG |
| 10 | NG | NG | NG | NG | 5<br>NG |

**Example 14** — **Coating layer: Acrylic (200 nm)**

(N/cm)

| Applied time (s) \ Applied voltage (V) | 10 | 20 | 30 | 40 | 50 |
|---|---|---|---|---|---|
| 60 | 5<br>NG | 4<br>NG | 0.1<br>OK | 0.1<br>OK | 0.1<br>OK |
| 50 | NG | NG | OK | OK | OK |
| 40 | NG | NG | 0.2<br>OK | OK | OK |
| 30 | NG | NG | 2<br>NG | 0.2<br>OK | OK |
| 20 | NG | NG | 4<br>NG | 3<br>NG | OK |
| 10 | NG | NG | NG | NG | 0.1<br>OK |

# FIG. 10

**Example 15**

**Coating layer: Polyester (200 nm)**

(N/cm)

| Applied time (s) \ Applied voltage (V) | 10 | 20 | 30 | 40 | 50 |
|---|---|---|---|---|---|
| 60 | 5<br>NG | 5<br>NG | 0.1<br>OK | 0.1<br>OK | 0.1<br>OK |
| 50 | NG | NG | OK | OK | OK |
| 40 | NG | NG | OK | OK | OK |
| 30 | NG | NG | 0.2<br>OK | 0.2<br>OK | OK |
| 20 | NG | NG | 3<br>NG | 3<br>NG | OK |
| 10 | NG | NG | 4<br>NG | 4<br>NG | 0.1<br>OK |

**Comparative Example 1**

**Coating layer: None**

(N/cm)

| Applied time (s) \ Applied voltage (V) | 10 | 20 | 30 | 40 | 50 |
|---|---|---|---|---|---|
| 60 | 0.1<br>OK | 0.1<br>OK | 0.1<br>OK | 0.1<br>OK | 0.1<br>OK |
| 50 | OK | OK | OK | OK | OK |
| 40 | OK | OK | OK | OK | OK |
| 30 | OK | OK | OK | OK | OK |
| 20 | OK | OK | OK | OK | OK |
| 10 | 0.1<br>OK | 0.1<br>OK | 0.1<br>OK | 0.1<br>OK | 0.1<br>OK |

# FIG. 11

**Example 16** — **Coating layer: SiNx (50 nm)**

(N/cm)

| Time (s) \ Voltage (V) | 10 | 20 | 30 | 40 | 50 |
|---|---|---|---|---|---|
| 60 | 3NG | 0.1OK | 0.1OK | 0.1OK | 0.1OK |
| 50 | NG | OK | OK | OK | OK |
| 40 | NG | OK | OK | OK | OK |
| 30 | NG | 0.1OK | OK | OK | OK |
| 20 | NG | 3NG | 0.1OK | OK | OK |
| 10 | NG | NG | 3NG | 0.1OK | 0.1OK |

**Example 17** — **Coating layer: Ni (100 nm)**

(N/cm)

| Time (s) \ Voltage (V) | 10 | 20 | 30 | 40 | 50 |
|---|---|---|---|---|---|
| 60 | 3NG | 0.1OK | 0.1OK | 0.1OK | 0.1OK |
| 50 | NG | OK | OK | OK | OK |
| 40 | NG | 1 OK | OK | OK | OK |
| 30 | NG | 3NG | OK | OK | OK |
| 20 | NG | NG | 1 OK | OK | OK |
| 10 | NG | NG | 3NG | 0.1OK | 0.1OK |

**INTERNATIONAL SEARCH REPORT**

International application No. PCT/JP2021/029037

A. CLASSIFICATION OF SUBJECT MATTER
Int.Cl. B32B27/00(2006.01)i, C09J9/00(2006.01)i, C09J9/02(2006.01)i, C09J11/06(2006.01)i, C09J201/00(2006.01)i, C09J7/29(2018.01)i, C09J7/30(2018.01)i, C09J7/38(2018.01)i, B32B7/06(2019.01)i
FI: C09J7/38, C09J7/29, C09J9/00, C09J11/06, C09J201/00, B32B27/00M, C09J9/02, B32B7/06, C09J7/30
According to International Patent Classification (IPC) or to both national classification and IPC

B. FIELDS SEARCHED

Minimum documentation searched (classification system followed by classification symbols)
Int.Cl. B32B27/00, C09J9/00, C09J9/02, C09J11/06, C09J201/00, C09J7/29, C09J7/30, C09J7/38, B32B7/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-37354 A (BIG TECHNOS KK) 18 February 2010 (2010-02-18), entire text, all drawings | 1-10 |
| A | JP 2014-189671 A (LINTEC CORPORATION) 06 October 2014 (2014-10-06), entire text, all drawings | 1-10 |
| A | WO 2007/018239 A1 (THE YOKOHAMA RUBBER CO., LTD.) 15 February 2007 (2007-02-15), entire text, all drawings | 1-10 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 September 2021 | 21 September 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/029037

| | | |
|---|---|---|
| JP 2010-37354 A | 18 February 2010 | (Family: none) |
| JP 2014-189671 A | 06 October 2014 | (Family: none) |
| WO 2007/018239 A1 | 15 February 2007 | US 2009/0035580 A1<br>entire text, all drawings<br>EP 1914285 A1<br>CN 101238191 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010037354 A
- JP 6097112 B
- JP 4139851 B
- JP 2019059908 A
- JP 2020135065 A
- JP 2021017545 A

### Non-patent literature cited in the description

- Polymer Handbook. John Wiley & Sons, Inc, 1989